# EUROPEAN PATENT SPECIFICATION

(11) **EP 4 457 608 B1**
(45) Date of publication and mention of the grant of the patent: **26.08.2026**
(21) Application number: 21844701.9
(22) Date of filing: 22.12.2021
(51) Int. Cl.: G06F 7/544

(54) **IN-MEMORY PROCESSING BASED ON MULTIPLE WEIGHT SETS**
SPEICHERINTERNE VERARBEITUNG AUF DER BASIS MEHRERER GEWICHTSSÄTZE
TRAITEMENT EN MÉMOIRE BASÉ SUR DE MULTIPLES ENSEMBLES DE POIDS

(43) Date of publication of application: 06.11.2024
(60) Divisional application: 26188127.0
(73) Proprietor: Axelera AI BV, 5656AE Eindhoven (NL)
(72) Inventor: KHADDAM-ALJAMEH, Riduan, 5656 AE Eindhoven (NL); ELEFTHERIOU, Evangelos, 5656 AE Eindhoven (NL); PAPISTAS, Ioannis, 5656 AE Eindhoven (NL); KATSELAS, Leonidas, 5656 AE Eindhoven (NL); HAGER, Pascal, 5656 AE Eindhoven (NL); ROOSELEER, Bram, 5656 AE Eindhoven (NL); MOONS, Bert, 5656 AE Eindhoven (NL); COSEMANS, Stefan, 5656 AE Eindhoven (NL); UYTTERHOEVEN, Roel, 5656 AE Eindhoven (NL); GARCEA, Giuseppe, 5656 AE Eindhoven (NL); POLIAKOV, Dmitri, 5656 AE Eindhoven (NL); YI, Lu, 5656 AE Eindhoven (NL); VAN LOON, Jeroen, 5656 AE Eindhoven (NL); MACHIELS, Brecht, 5656 AE Eindhoven (NL)
(74) Representative: E. Blum & Co. AG
(86) International application number: PCT/EP2021/087303
(87) International publication number: WO 2023/117081

(56) References cited:
- CN-A- 111 523 658
- US-A1- 2022 005 525
- OBRADOVIC BORNA ET AL: "A Multi-Bit Neuromorphic Weight Cell Using Ferroelectric FETs, suitable for SoC Integration", IEEE JOURNAL OF THE ELECTRON DEVICES SOCIETY, vol. 6, 4 June 2018 (2018-06-04), pages 438 - 448, XP011680417, DOI: 10.1109/JEDS.2018.2817628
- SHIN HYEIN ET AL: "Fault-free: A Fault-resilient Deep Neural Network Accelerator based on Realistic ReRAM Devices", 2021 58TH ACM/IEEE DESIGN AUTOMATION CONFERENCE (DAC), IEEE, 5 December 2021 (2021-12-05), pages 1039 - 1044, XP034013196, DOI: 10.1109/DAC18074.2021.9586286

## Description

### BACKGROUND

The invention relates in general to the field of in-memory processing techniques (i.e., methods, devices, and systems) and related acceleration techniques. In particular, it relates to in-memory processing devices involving crossbar array structures for performing matrix-vector-multiplications with in-memory sequential partial product accumulation and coefficient prefetching.

Matrix-vector multiplications are frequently needed in a number of applications, such as technical computing and cognitive tasks. Examples of such cognitive tasks are the training of, and inferences performed with, cognitive models, such as neural networks for computer vision and natural language processing, and other machine learning models, such as used for weather forecasting and financial predictions.

Such operations pose multiple challenges, because of their recurrence, universality, and size and memory requirements. On the one hand, there is a need to accelerate these operations, notably in high-performance computing applications. On the other hand, there is a need to achieve an energy-efficient way of performing them.

Traditional computer architectures are based on the von Neumann computing concept, where processing capability and data storage are split into separate physical units. Such architectures suffer from congestion and high-power consumption, as data has to be continuously transferred from the memory units to the control and arithmetic units through physically constrained and costly interfaces.

One possibility to accelerate matrix-vector multiplications is to use dedicated hardware acceleration devices, such as a dedicated circuit having a crossbar array configuration. This circuit includes input lines and output lines, which are interconnected at cross-points defining cells. The cells contain respective memory devices, which are designed to store respective matrix coefficients. Vectors are encoded as signals applied to the input lines of the crossbar array, to cause the latter to perform multiply-accumulate (MAC) operations. There are several possible implementations. For example, the coefficients of the matrix ("weights") can be stored in columns of cells. Next to every column of cells is a column of arithmetic units that can multiply the weights with input vector values (creating partial products) and finally accumulate all partial products to produce the outcome of a full dot-product. Such an architecture can simply and efficiently map a matrix-vector multiplication. The weights can be updated by reprogramming the memory elements, as needed to perform matrix-vector multiplications. Such a solution breaks the "memory wall" as it fuses the arithmetic- and memory unit into a single in-memory-computing (IMC) unit, whereby processing is done much more efficiently in or near the memory.

Devices having such a crossbar array structure are routinely used. Now, the present inventors set themselves the challenge of improving such devices, notably to make them more energy-efficient and computationally faster.

CN111523658A notes that existing in-memory computing circuits based on SONOS or floating gate technology store weights by means of charge trapping in a transistor. However, when the bit width of a weight is too high or the weight has been erased for many times in the memory, the memory cell suffers reliability problems, such as erasure interference, leakage current due to over erase, and the like, which affect the power consumption, operation accuracy and reliability of a neural network system. In order to solve this problem, CN111523658A provides a two-bit memory cell including a control transistor and two charge storage transistors, and further provides applying the memory array consisting of the two-bit memory cells to store weights of a neural network, and perform multiply accumulate operation on the neural network with a two-step current detection method. The two-bit memory cell comprises three transistors in series, in which the middle transistor is a select transistor used as a switch, and a first charge storage transistor and a second charge storage transistor are symmetrically disposed on two sides of the select transistor. Gate electrodes of the first charge storage transistor and the second charge storage transistor are connected to respective word lines, and the drain side of the first charge storage transistor and the source side of the second charge storage transistor are respectively connected to the cell bit line and the cell source line, while the source side of the first charge storage transistor and the drain side of the second charge storage transistor are respectively connected to the drain side and the source side of the select transistor. The cell bit line and the cell source line are completely exchangeable during operation and form symmetric cells after exchange, in which the drain side of the first charge storage transistor and the source side of the second charge storage transistor are respectively connected to the cell source line and the cell bit line while the source side of the first charge storage transistor and the drain side of the second charge storage transistor are respectively connected to the drain side and the source side of the select transistor. The two-bit memory cell and its adjacent symmetric cell form a cell pair group.

During write operation, a positive voltage is applied to the word line of the target charge storage transistor and a negative voltage is applied to the cell P well, and electrons are injected into the storage layer under the voltage difference; a negative voltage is applied to the word line of the other charge storage transistor to remain an equilibrium electric potential with the P well; and a positive switching voltage is applied to the word line of the select transistor in the cell to keep the select transistor on. During erase operation, a negative voltage is applied to both the word lines of the first and the second charge storage transistors and a positive voltage is applied to the cell P well, and electrons are synchronously erased from the storage layers of the two storage transistors under the positive-negative voltage difference; in the process, the word line of the select transistor in the cell can be selected to be on or off. During read operation, a positive voltage is applied to the word line of the select transistor to keep the transistor on; a positive override voltage is applied to the word line of the charge storage transistor conjugated with the reading target charge storage transistor, so as to override the charge storage transistor; the voltage value of the positive override voltage is greater than the value of the highest point in the threshold voltage distribution of the storage bits, and is less than half of the write voltage.

In a neural network matrix operation adopting positive and negative weights, the positive and negative weights are stored in different weight page groups. The output terminal of the multiplexer detects currents of all the positive weight page group and stores electric charges in a capacitor; and after the drain electrode and the source electrode are exchanged, the output terminal detects currents of all the negative weight page group and stores the currents in another capacitor; the current subtracter outputs a current difference between the two groups of currents, and the current difference and a reference current are inputted together into the current comparison amplifier to generate a digital output value of the multiplier accumulator.

### SUMMARY

According to a first aspect, the present invention is embodied as a method of in-memory processing, the aim of which is to perform matrix-vector calculations. The method relies on a device having a crossbar array structure. The latter includes *N* input lines and *M* output lines, which are interconnected at cross-points defining *N* × *M* cells, where *N* ≥ 2 and *M* ≥ 2. The cells include respective memory systems, each designed to store *K* weights, where *K* ≥ 2. Thus, the crossbar array structure includes *N* × *M* memory systems, which are capable of storing *K* sets of *N* × *M* weights, which correspond to *K* respective *N* × *M* matrices. That is, each of the *N* × *M* weights of each of the *K* sets represents a respective matrix coefficient of a respective one of the *K* respective *N* × *M* matrices. In order to perform multiply-accumulate (MAC) operations, the method first enables *N* × *M* active weights as currently active weights for the *N* × *M* cells by selecting, for each of the memory systems, a weight from its *K* weights and setting the selected weight as an active weight. Next, signals encoding a vector of *N* components are applied to the *N* input lines of the crossbar array structure. This causes the crossbar array structure to perform a matrix-vector multiplication of a matrix corresponding to the *N* × *M* weights currently active and said vector, which is achieved by way of MAC operations, i.e., by performing *M* MAC operations based on said vector and the *N* × *M* weights that are currently active. The *M* MAC operations involving *N* × *M* multiplications and *N* × *M* additions.

Eventually, output signals obtained in output of the *M* output lines are read out to obtain *M* corresponding values, where such values are values of an output vector of said matrix-vector multiplication.

The above scheme allows distinct sets of weights to be locally enabled at the crossbar array, which makes it possible to switch between active weights locally and accordingly reduce the frequency of data exchanges with a memory unit. This, in turn, reduces idle times of the core compute device, i.e., the crossbar array structure. That is, some intermediate weight updates can be avoided, because up to *K* successive computation cycles can be performed without the need to transfer new sets of weights. Instead, the relevant weight sets can be locally enabled as active weights at each calculation cycle. In addition, partial results can be locally accumulated, to avoid transferring intermediate results. Thus, the proposed approach makes it possible to substantially reduce the frequency of data transfers, which results in speeding up computations and reducing the power consumption needed to perform matrix-vector calculations.

A crossbar configuration of the crossbar array structure may cause the *M* MAC operations to be performed in parallel upon applying the signals encoding the vector of *N* components to the *N* input lines, as further discussed below.

In particularly advantageous embodiments, the method further comprises prefetching weights, while performing MAC operations in accordance with *N* × *M* weights that are currently enabled as active weights. That is, *q* sets of *N* × *M* weights (i.e., weights to be used next) are prefetched and stored in the *N* × *M* memory systems, in place of *q* sets of *N* × *M* weights that were previously active, where 1 ≤ *q* ≤ *K -* 1. In other words, the weights can be proactively loaded (i.e., prefetched during a given compute cycle), if necessary, to further reduce idle times of the crossbar structure. Of particular advantage is that the prefetching steps are at least partly hidden through pipelining.

Preferably, the *N* × *M* active weights are enabled by concomitantly selecting the *k*^{th} weight of the *K* weights of each memory system of at least a subset of the *N* × *M* memory systems and setting each weight accordingly selected as a currently active weight, where 1 ≤ *k* ≤ *K.* As a result, the array structure can change context almost instantaneously.

In typical embodiments, several matrix-vector calculation cycles are successively performed. Each cycle comprises operations as recited above. I.e., first a new set of *N* × *M* active weights is enabled for the *N* × *M* cells by selecting, for each of the memory systems, a weight from its *K* weights and setting the selected weight as an active weight. Next, signals encoding a vector of *N* components are applied to the *N* input lines of the crossbar array structure to cause the latter to perform MAC operations, based on the current vector and the new set of *N* × *M* active weights. Eventually, output signals obtained in output of the *M* output lines are read out to obtain corresponding values. Up to *K* such cycles can be performed without the need to transfer new weights to the memory systems of the array.

Preferably, each of the cycles further comprises accumulating partial product results corresponding to the output signals read out, whereby accumulations are successively performed. Upon completing the several matrix-vector calculation cycles, the method may for instance return results obtained based on the successive accumulations to an external memory unit (i.e., external to the array). Thus, there is no need to transfer intermediate results.

If necessary, new weights may be prefetched, prior to completing *K* cycles of the several matrix-vector calculation cycles. That is, the method may prefetch *q* sets of *N* × *M* weights and store the latter in the *N* × *M* memory systems, in place of *q* sets of *N* × *M* previously enabled as active weights, where 1 ≤ *q* ≤ *K -* 1. Interestingly, because new weight values may possibly be prefetched in-between, further matrix-vector calculation cycles can be performed (beyond the *K* cycles), uninterruptedly, while keeping on accumulating partial results. Again, the prefetching steps are hidden through pipelining. The final results can be returned at the very end of the whole matrix-vector calculations, without suffering from idle times due to intermediate data transfer.

Large operands may for instance be handled by decomposing the required operations into *K* × *T* matrix-vector calculations. That is, the method may perform *K* × *T* matrix-vector calculation cycles, where *T* corresponds to a number of input vectors. Each input vector is decomposed into *K* sub-vectors of *N* components and is associated with *K* respective block matrices, the latter corresponding to *K* sets of *N* × *M* weights. Note, the sub-vectors actually correspond to the vectors introduced above; each sub-vector is a portion of an input vector. In that case, *K* × *T* matrix-vector calculation cycles are performed as follows. To start with, *K* sets of *N* × *M* weights are loaded. The *K* sets of *N* × *M* weights correspond to the *K* block matrices. The memory systems are accordingly programmed to store the *K* sets of *N* × *M* weights. Next, several operations are performed and, this, for each of the *K* sub-vectors of each of the *T* input vectors. First, *N* × *M* weights are enabled (as currently active weights), which are the weights corresponding to one of the *K* respective block matrices, i.e., the block matrix associated to the current sub-vector. Second, signals encoding a vector corresponding to each sub-vector are applied to the *N* input lines, which causes the crossbar array structure to perform MAC operations based on each sub-vector and the currently active weights. Third, the method reads out output signals as obtained in output of the *M* output lines to obtain corresponding partial values.

The readout preferably comprises accumulating the partial values obtained for each sub-vector with partial values as previously obtained for a previous one of the *K* sub-vectors, if any, to obtain updated results. Eventually, the method returns results obtained based on the updated results obtained last.

In embodiments, an external processing unit (i.e., external to the array) is used to map a given problem onto a given number of sub-vectors and a set of *K* sets of *N* × *M* weights, prior to programming the *N* × *M* memory systems in accordance with the *K* sets of *N* × *M* weights and encoding the sub-vectors into input signals, with a view to subsequently applying such input signals to the *N* input lines to perform the several matrix-vector calculation cycles. Note, the external processing unit may possibly be co-integrated with the crossbar array structure. In variants, it forms part of a separate device or machine.

The *N* × *M* memory systems may either be digital or analogue memory systems. In either case, the MAC operations may be performed in parallel or as bit-serial operations.

In embodiments where the *N* × *M* memory systems are digital memory systems, each of the *N* × *M* cells further comprises an arithmetic unit connected to a respective one of the *N* × *M* memory systems.

For example, the MAC operations may be performed bit-serially in *P* cycles, *P* ≥ 2, wherein *P* corresponds to a bit width of each of the *N* components of each of the vectors (or sub-vectors) used in input. In that case, partial product values are obtained, which are locally accumulated (at the crossbar array) upon completing each of the *P* cycles. This accumulation, however, should be distinguished from the accumulation performed upon completing vector-level operations, i.e., operations relevant to vectors (or sub-vectors), when successively processing several vectors (or sub-vectors).

According to another aspect, the invention is embodied as a computer program for in-memory processing. The computer program product comprises a computer readable storage medium having program instructions embodied therewith. The program instructions are executable by processing means of an in-memory processing hardware device to cause the latter to perform the steps of any of the methods described above.

According to a further aspect, the invention is embodied as an in-memory processing hardware device. Consistently with the present methods, the device comprises a crossbar array structure including *N* input lines and *M* output lines, which are interconnected at cross-points defining *N* × *M* cells, where *N* ≥ 2 and *M* ≥ 2. The cells include respective memory systems, each designed to store *K* weights, where *K* ≥ 2. That is, the crossbar array structure includes *N* × *M* memory systems, which, as a whole, are adapted to store *K* sets of *N* × *M* weights. The *K* sets of *N* × *M* weights correspond to *K* respective *N* × M matrices, where each of the *N* × *M* weights of each of the *K* sets represents a respective matrix coefficient of a respective one of the *K* respective *N* × *M* matrices. The crossbar array structure is configured to perform MAC operations. The device further includes a selection circuit connected to the *N* × *M* memory systems. The selection circuit is configured to select a weight from the *K* weights of each of the memory systems and set the selected weight as an active weight, so as to enable *N* × *M* active weights as currently active weights for the *N* × *M* cells, in operation. The device additionally includes an input unit, which is configured to apply signals encoding a vector of *N* components to the *N* input lines of the crossbar array structure to cause the latter to perform a matrix-vector multiplication of a matrix corresponding to the *N* × *M* weights currently active and said vector by performing *M* MAC operations based on said vector and the *N* × *M* weights that are currently, as enabled by the selection circuit, in operation. The device further includes a readout unit, which is configured to read out output signals obtained in output of the *M* output lines to obtain *M* corresponding values of an output vector of said matrix-vector multiplication, in operation. A crossbar configuration of the crossbar array structure is preferably configured to cause the *M* MAC operations to be performed in parallel, upon applying the signals encoding the vector of *N* components to the *N* input lines, as noted earlier.

In embodiments, each of the *N* × *M* memory systems is designed so that its *K* weights are independently programmable. The device may further include a programming circuit that is connected to each memory system. The programming circuit is configured to program the *K* weights of the *N* × *M* memory systems. The programming circuit may advantageously be configured to prefetch *q* sets of *N* × *M* weights that are not currently set as active weights, and accordingly program the *N* × *M* memory systems, for the latter to store the prefetched weights in place of *q* sets of *N* × *M* weights, where 1 ≤ *q* ≤ *K -* 1.

In preferred embodiments, each of the *N* × *M* memory systems includes *K* memory elements, each adapted to store a respective weight of the *K* weights, and the selection circuit includes *N* × *M* multiplexers, each connected to each of the *K* memory elements of a respective one of the *N* × *M* memory systems, as well as selection control lines, which are connected to each of the multiplexers, so as to allow any one of the *K* weights of each of the memory systems to be selected and set as an active weight, in operation.

Preferably, the selection circuit is further configured to select a subset of *n* × *m* weights from one of the *K* sets of *N* × *M* weights, by concomitantly selecting the *k*^{th} weight of the *K* weights of each memory system of a subset of *n* × *m* memory systems of the *N* × *M* memory systems, where 2 ≤*n* ≤ *N*, 2 ≤ *m* ≤ *M*, and 1 ≤ *k* ≤ *K.*

In embodiments, the in-memory processing hardware device further comprises a sequencer circuit and an accumulator circuit. The sequencer circuit is connected to the input unit and the selection circuit to orchestrate operations of the input unit and the selection circuit, so as to successively perform several cycles of matrix-vector calculations based on one or more sets of vectors. In operation, each of the cycles of matrix-vector calculations involves one or more cycles of MAC operations. A distinct set of *N* × *M* weights are selected from the *K* sets of *N* × *M* weights and set as *N* × *M* active weights at each of the cycles of matrix-vector calculations. The accumulator circuit is configured to accumulate partial product values obtained upon completing each MAC operation cycle. Preferably, the accumulator circuit is arranged at the output of the output lines.

In preferred embodiments, each of the *N* × *M* memory systems includes *K* memory elements, each adapted to store a respective weight of the *K* weights. Each of the *K* memory elements of each of the *N* × *M* memory systems may for instance be a digital memory element. In that case, each of the *N* × *M* cells further includes an arithmetic unit, which is connected to each of the *K* memory elements of a respective one of the *N* × *M* memory systems via a respective portion of the selection circuit.

In embodiments, each of the *K* memory elements of each of the *N* × *M* memory systems is designed to store a *P*-bit weights. The input unit is configured to apply said signals so as to bit-serially feed a vector of *N* components to the input lines in *P* cycles, where each of the *N* components corresponds to a P-bit input word and *P* ≥ 2. The *N* × *M* cells are configured to perform MAC operations in a bit-serial manner, in *P* cycles. In addition, the hardware device further includes an accumulator circuit, which is configured to accumulate values corresponding to partial, bit-serial product values as obtained at each of the *P* cycles. Moreover, the selection circuit is configured to maintain a same set of *N* × *M* weights as active weights during each of the *P* cycles.

Preferably, the in-memory processing hardware device further comprises a configuration and control logic connected to each of the input unit and the selection circuit, as well as a pre-data processing unit connected to the configuration and control logic, and a post-data processing unit connected in output of the output lines.

According to another aspect, the invention is embodied as a computing system comprising one or more in-memory processing hardware devices such as described above. Preferably, the computing system further comprises: a memory unit and a general-purpose processing unit connected to the memory unit to read data from, and write data to, the memory unit. Each of the in-memory processing hardware devices is configured to read data from, and write data to, the memory unit. The general-purpose processing unit is configured to map a given computing task to vectors and weights for the memory systems of the one or more in-memory processing hardware devices.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 schematically represents a computerized system, in which a user interacts with a server, via a personal computer, in order to offload matrix-vector calculations to dedicated hardware accelerators, as in embodiments of the invention;
FIGS. 2A and 2B schematically represent selected components of a hardware accelerator that is optimized for performing in-memory computing (IMC) matrix-vector multiplications, as involved in embodiments. FIG. 2A depicts a crossbar array structure of the hardware accelerator. FIG. 2B is a diagram showing additional components of the hardware accelerator;
FIG. 3A is a diagram of an IMC array involving columns of arithmetic units (multipliers and adder trees) connected to respective columns of memory elements, where each memory cell includes a memory system of several memory elements. As a whole, the crossbar array structure includes *N* × *M* memory systems capable of storing *K* sets of *N* × *M* weights, as in embodiments;
FIG. 3B schematically depicts a given row of memory cells, as well as portions of a programming circuit and a selection circuit, as involved in embodiments. The depicted portions of the programming circuit and the selection circuit are connected to a single memory cell. Other portions are not shown, for the sake of depiction. In practice, however, the programming circuit and the selection circuit are connected to each memory cell;
FIG. 3C is a simplified circuit schematics of components of a selection circuit, which are connected to a respective memory cell, as involved in embodiments;
FIGS. 4A and 4B show two examples of IMC chip configurations, according to embodiments. In each case, an IMC array is connected to accumulators. FIG. 4A assumes a bit-serial injection of the vector components for matrix-vector multiplications, while FIG. 4B assumes parallel operations;
FIG. 5A is a diagram illustrating how a matrix-matrix multiplication involving large operands (matrices) can be handled by a smaller-size IMC array, whereby an input matrix is decomposed into input vectors, which are themselves partitioned into sub-vectors, to which distinct block matrices are assigned for performing successive matrix-vector multiplications, by locally enabling respective matrix coefficient arrays and accumulating partial results, prior to returning a final result, as in embodiments;
FIG. 5B illustrates a corresponding rotation of the *K* sets of coefficients (weights), after having initially loaded the *K* sets of weights, as in embodiments;
FIG. 6 is a diagram illustrating how matrix coefficients (to be used next) can be prefetched, to accelerate computations, as in embodiments; and
FIG. 7 is a flowchart illustrating high-level steps of a method of performing matrix-matrix multiplications similar to the multiplication illustrated in FIG. 5A, as in embodiments.

The accompanying drawings show simplified representations of devices or parts thereof, as involved in embodiments. Similar or functionally similar elements in the figures have been allocated the same numeral references, unless otherwise indicated.

Computerized devices, systems, methods, and computer program products embodying the present invention will now be described, by way of non-limiting examples.

### DETAILED DESCRIPTION OF EMBODIMENTS OF THE INVENTION

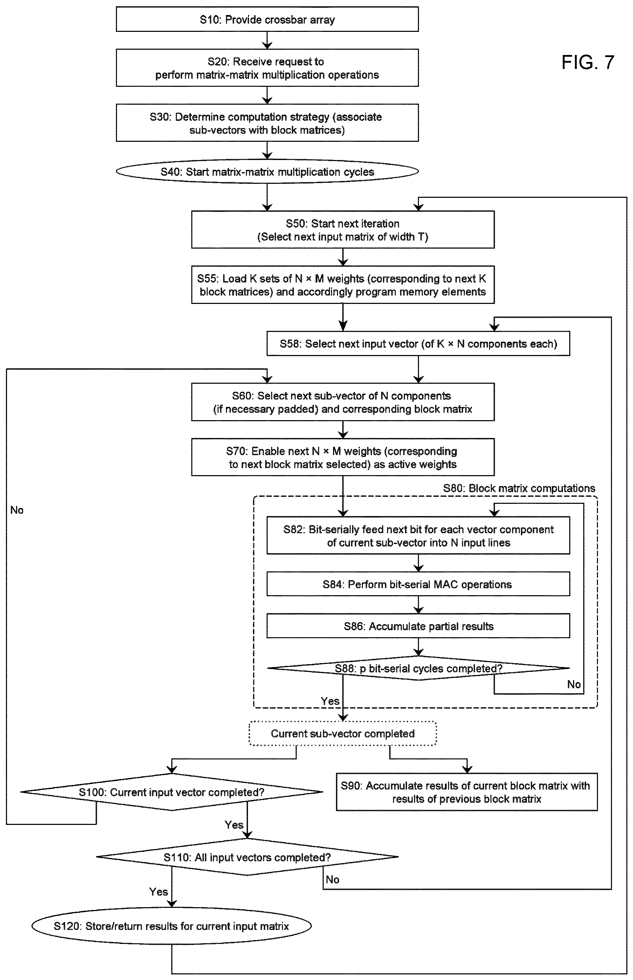

The following description is structured as follows. General embodiments and high-level variants are described in section 1, while section 2 addresses particularly preferred embodiments. Section 3 aggregates final remarks. Note, the present method and its variants are collectively referred to as the "present methods". All references Sn refer to methods steps of the flowcharts of FIG. 7, while numeral references pertain to devices, components, and concepts involved in embodiments of the present invention.

### 1. General embodiments and high-level variants

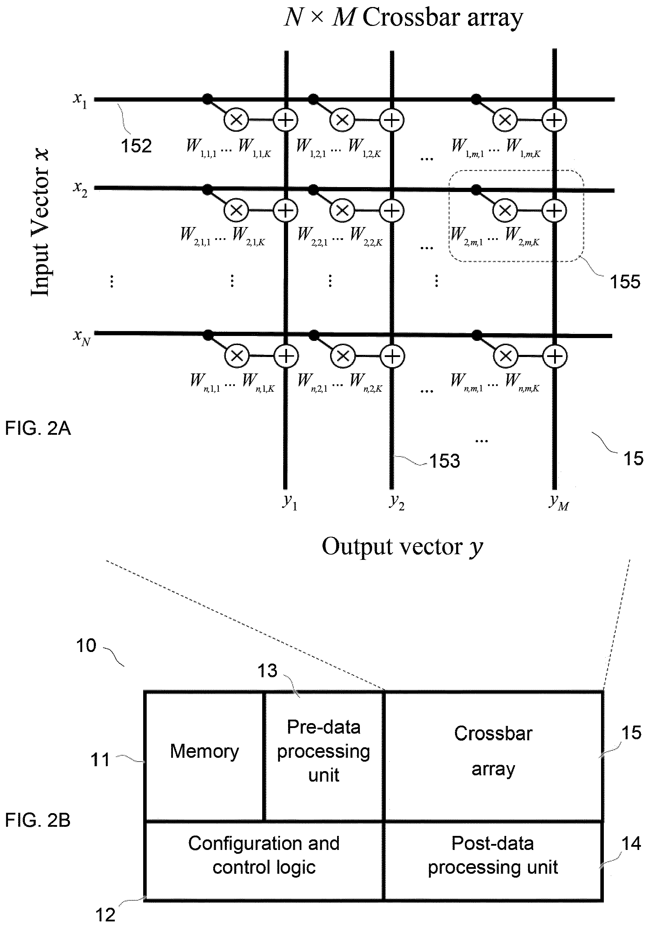

A first aspect of the invention is now described in reference to FIGS. 2A - 4B, and 7. This aspect concerns a method of in-memory processing, the aim of which is to accelerate multiply-accumulate operations, or MAC operations.

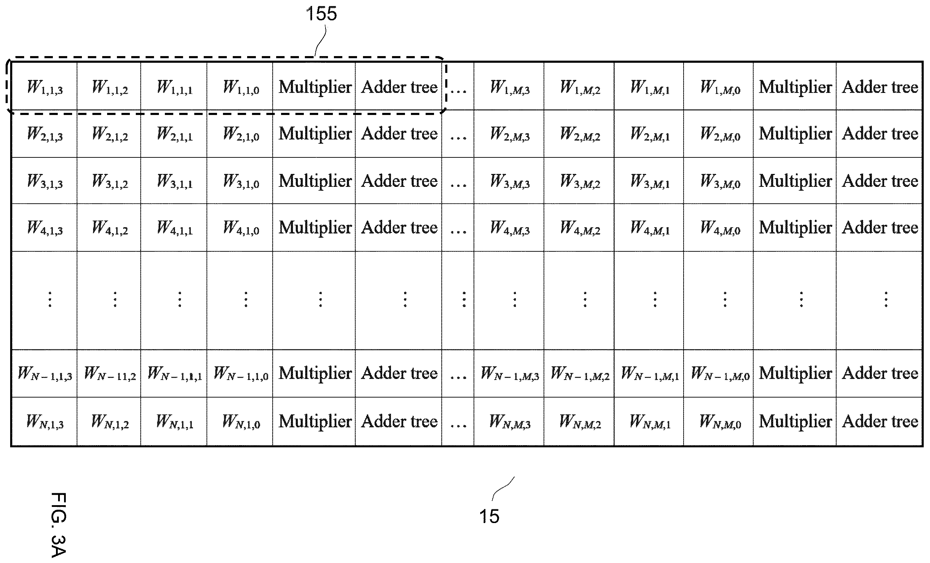

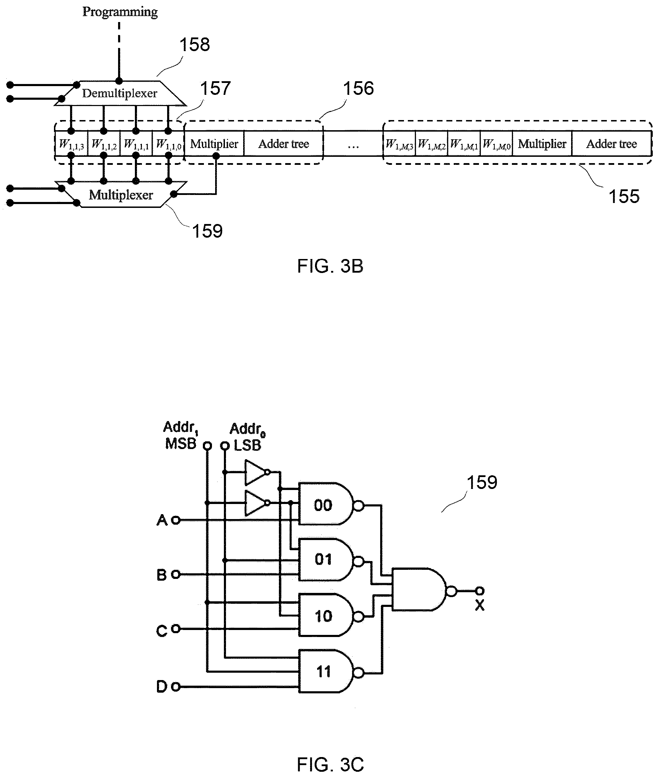

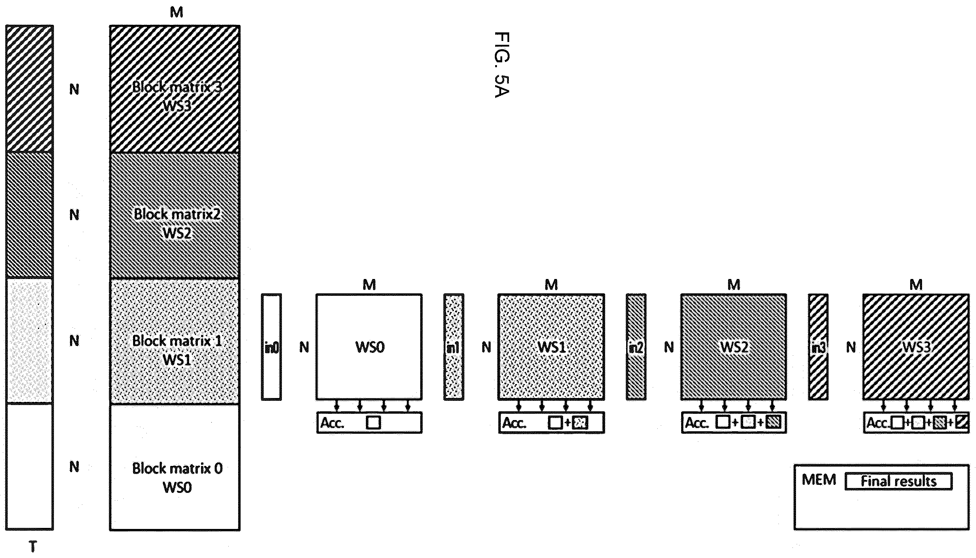

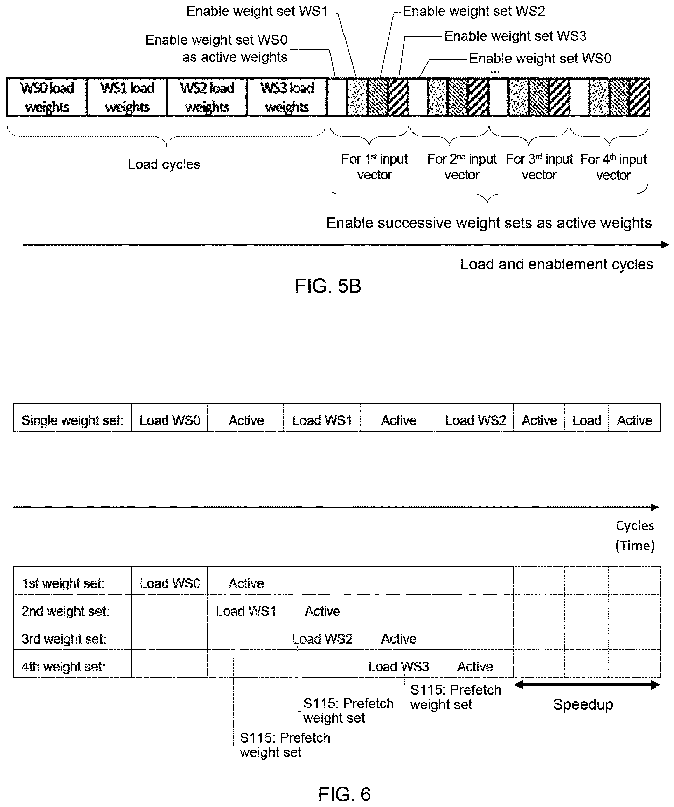

The methods relies on a device 10, 10a having a crossbar array structure 15, 15a. A crossbar array is explicitly shown in FIG. 2A. This structure 15, 15a includes *N* input lines 152 and *M* output lines 153, where *N* ≥ 2 and *M* ≥ 2. The input lines and output lines 152, 153 are interconnected at cross-points (i.e., junctions). The cross-points accordingly define *N* × *M* cells 155. The cells 155 include respective memory systems 157. Remarkably, each memory system 157 is designed to store *K* weights, where *K* ≥ 2. In practice, *K* may typically be equal to 4 (as assumed in FIG. 3A, 3B, and 5A, 5B), 8, 16, or 32. Overall, the crossbar array structure 15 includes *N* × *M* memory systems, which are capable of storing *K* sets of *N* × *M* weights, i.e., *K* × *N* × *M* weights in total.

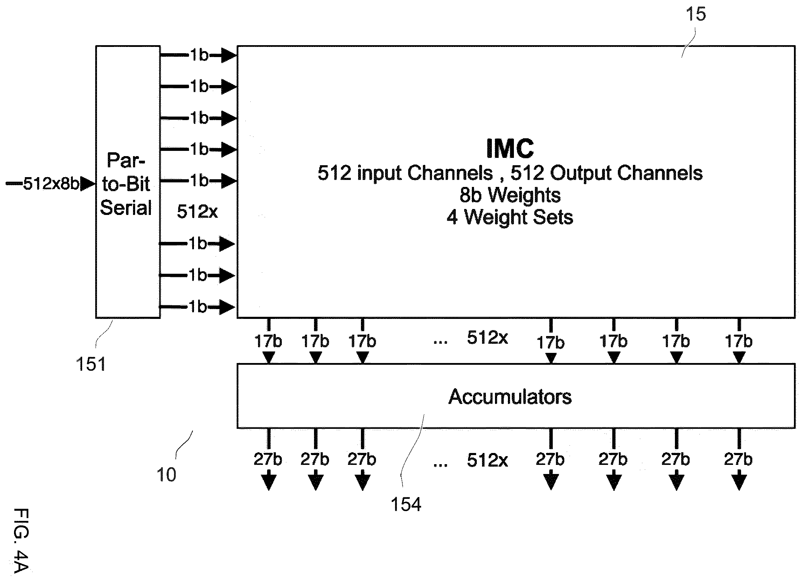

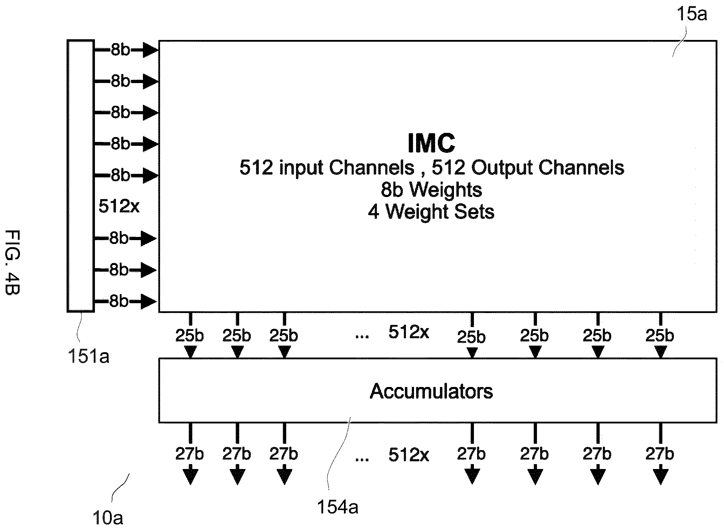

In other words, the crossbar array structure 15 includes *N* × *M* cells 155 in a crossbar configuration, where each cross-point of the cross-bar configuration corresponds to a cell and each cell involves a memory system 157 capable of storing *K* weights. Such weights are noted *W_{i,j,k}* in FIG. 2A, where *i* runs from 1 to *N, j* from 1 to *M,* and *k* from 1 to *K.* In practice, the number of input lines 152 and output lines 153 will typically be on the order of several hundreds to thousands of lines. For example, arrays of 256 × 256, 512 × 512 (as in FIGS. 4A and 4B), or 1024 × 1024 may be contemplated, although *N* need not be necessarily equal to *M.* The concept of input lines and output lines is further discussed below.

The proposed method basically revolves around enabling certain weights, prior to performing MAC operations based on given vectors and matrix coefficients corresponding to the enabled weights. That is, *N* × *M* weights are enabled at step S70 (see the flowchart of FIG. 7) for the *N* × *M* cells 155. This is achieved by selecting, for each memory system, a weight from its *K* potential weights and then setting the selected weight as an active weight. Note, the selection and setting of the weights may actually be performed as a single operation, notably when using a selection circuit 159 relying on multiplexers connected to respective memory systems, as in embodiments discussed below in reference to FIG. 3C.

Once a set of weights has been enabled, vector components are injected (step S82) into the crossbar array structure 15. More precisely, signals encoding a vector of *N* components (hereafter referred to as an *N*-vector) are applied S82 to the *N* input lines 152 of the crossbar array structure 15. This causes the crossbar array structure 15 to perform S84 MAC operations based on the *N-vector* and the *N* × *M* active weights as currently enabled. The MAC operations result in that the values encoded by the signals fed into the *N* input lines are respectively multiplied by the currently active weight values, as enabled from the *K* sets of weights stored in the memory systems 157.

As per the crossbar configuration, *M* MAC operations are being performed in parallel, during each calculation cycle. Note, the operations performed at every cell correspond to two scalar operations, i.e., one multiplication and one addition. Thus, the *M* MAC operations imply *N* × *M* multiplications and *N* × *M* additions, meaning 2 × *N* × *M* scalar operations in total.

Output signals obtained in the *M* output lines 153 are subsequently read out at step S90 to obtain corresponding values. In practice, several calculation cycles need often be successively performed, whereby weights are locally enabled (i.e., selected and set as active weights) at each cycle, prior to feeding components of an N-vector to perform MAC operations and read the output values. Such output values may correspond to partial values, which may advantageously be accumulated locally, at the device 10, 10a. In that respect, the readout operation performed *in fine* should be understood in a broad sense. The readout operation may not only aim at extracting the output values, but also accumulating them with previous output values (if necessary), and/or storing such values.

Remarkably, the proposed scheme allows distinct sets of weights to be locally enabled at the crossbar array 15, which makes it possible to locally perform rotations of the weights and accordingly reduce the frequency of data exchanges with a memory unit, be it a unit that is external to the device 10, 10a or integrated therein. This, in turn, reduces idle times of the device 10, 10a. That is, some intermediate weight updates are avoided, because up to *K* successive computation cycles can be performed without the need to transfer new sets of weights. Instead, the relevant weight sets are locally enabled as active weights at each calculation cycle. Moreover, the weights may possibly be proactively loaded (i.e., prefetched during the compute cycles), if necessary, to further reduce idle times of the crossbar structure 15. Thus, the proposed approach makes it possible to substantially reduce the frequency of weight data transfers, which results in speeding up computations. And because partial results can be locally accumulated, such results need not be transferred either, which reduces the power consumption of the device 10, 10a.

Comments are in order. Each memory system 157 preferably includes *K* distinct memory elements, for simplicity. Such elements can be connected in such a manner that they can be independently programmed. This allows the weights (to be used next) to be prefetched, as in preferred embodiments discussed below. The memory elements can for instance be programmed to store binary or multi-bit data, similar to synaptic weights of synaptic crossbar array structures.

The weights relate to numerical values and represent matrix coefficients. Such weights capture a (portion of the) problem to be solved and need to be accordingly programmed in the memory systems 157. In that respect, the hardware device 10 may advantageously include a programming circuit 158 (FIG. 3B) configured to program the *N* × *M* memory systems 157, for the latter to store respective sets of *K* weights. The programming circuit may for instance be controlled by a logic unit 12 in the device 10, 10a. In variants, the programming circuit may be external, in which case the device will likely include pads and traces dedicated to the programming of the memory elements.

Programming memory elements of an IMC device is known *per se.* In the present context, however, what is needed is to suitably and timely program several memory elements (or several memory values of the memory system) for each cell. What is further needed is to suitably select the active weights. To that aim, a selection circuit 159 (FIGS. 3B, 3C) can be used to perform the required weight selection and enable the selected weights as active weights.

The vectors (also referred to as *N*-vectors above) used in input have *N* components each, in accordance with the number *N* of input lines. Such vectors may in fact correspond to portions of larger input vectors. That is, the problem to be solved (e.g., a matrix-matrix multiplication) may typically involve large operands. Thus, the initial problem may have to be decomposed into smaller matrix-vector operations, involving portions of input vectors and matrices, partitioned in accordance with the size of the array 15. E.g., an input matrix may be decomposed into input vectors, themselves decomposed into sub-vectors (i.e., the N-vectors), which are assigned respective block matrices, with a view to performing multiple operations, the outputs of which can eventually be recomposed to form a final result.

Thus, in practice, the basic operation principle amounts to feeding N-vectors into the array 15 to perform matrix-vector operations based, on the one hand, on the vector components fed, and, on the other hand, on the currently active weights, where the latter are judiciously enabled in accordance with the current *N*-vector.

To perform the MAC operations, input signals are applied to the *N* input lines, which signals encode components of the *N*-vectors. I.e., each input signal encodes a distinct vector component and is applied to a respective input line. The input signals correspond to so-called data channels in synaptic crossbar structures. Each vector component and each matrix coefficient can for instance be encoded as a P-bit value. I.e., the MAC operations can be implemented in a bit-serial manner (as assumed in FIG. 4A and 7) or in parallel (as in FIG. 4B). In bit-serial implementations, each multiplication operation is performed in *P* bit-serial cycles (e.g., *P* = 8 or 16), as discussed later in detail in reference to preferred embodiments. In variants, each P-bit word (a vector component) is injected in parallel to the *M* cells of a corresponding input line.

The present approach is compatible with analogue memory elements and analogue operations. In analogue electrical implementations, digital inputs are transformed through digital-to-analogue converters (DACs) or pulse-width modulators (PWMs) to analogue representations and then applied to the input lines. Each cell operation typically corresponds to a single analogue operation in that case, whereby an input signal is multiplied by a weight value carried by a memory component, as a result of an electrical interaction with that component, and branched in output to a column, effectively resulting to analogue addition operation . A similar principle can be exploited with optical input signals. Digital implementations rely on digital memory systems. I.e., the *N* × *M* memory systems 157 are digital memory systems (e.g., each including *K* digital memory elements). In that case, each of the *N* × *M* cells 155 comprises an arithmetic unit 156 (including a multiplier and an adder tree), connected to a respective memory system 157, as assumed in FIGS. 2A, 3A, and 3B.

Note, for completeness, that an input line 152 refers to a channel through which data are communicated to M cells, by way of signals. However, such input lines do not necessarily correspond to the number of physical conductors or logical channels actually needed to reach the cells. In bit-serial implementations, each input line may include a single physical line, which suffices to feed input signals carrying the N-vector component data. In parallel data ingestion approaches, however, each input line may include up to P parallel conductors, each connected to the *M* cells of the corresponding input line. In such cases, P bits are injected in parallel via parallel conductors to each of the *M* corresponding cells. Still, various intermediate configurations can be contemplated, involving both parallel and bit-serial feeding of the data.

The hardware device 10, 10a is preferably manufactured as an integrated structure, e.g., a microchip, integrating all components necessary to perform the core computation steps. Such components may notably include an input unit 151, 151a (FIGS. 4A, 4B) to apply the input signals to the *N* input lines 152, a programming circuit 158 (FIG. 3B), a selection circuit 159 (FIGS. 3B, 3C), and a readout unit 154, 154a (FIGS. 4A, 4B), which may include accumulators. The selection circuit 159 and the input unit 151 may for instance form part of a same configuration and control logic circuit and be controlled by a same logic unit 12 (FIG. 2B), as in embodiments. The device 10, 10a itself concerns another aspect of the invention, which is described later in detail.

Particular embodiments of the present methods are now discussed. To start with, the weights can be proactively loaded (i.e., prefetched during a compute cycle), if necessary, to further reduce idle times of the crossbar structure. The prefetching mechanism as illustrated in FIG. 6. A tremendous advantage is that the prefetching steps can be (at least partially) hidden through pipelining.

In detail, new weights can be prefetched during a current compute cycle, i.e., while performing MAC operations in accordance with the *N* × *M* weights that are currently enabled as active weights. Up to *q* sets of *N* × *M* weights (i.e., weights to be used next) can be prefetched S115 and stored in the *N* × *M* memory systems 157, in place of *q* sets of *N* × *M* weights that were previously active, where 1 ≤ *q* ≤ *K -* 1.

Note, *K* sets of *N* × *M* weights may initially be loaded in the array, prior to starting cycles of matrix-vector calculations. Thus, the subsequent prefetching steps are typically preformed iteratively. Prefetching weight sets allows a proactive approach, which makes it possible to further speed up computations, as illustrated in FIG. 6.

For example, assume that one or more matrix-matrix multiplications have to be performed. In the example in FIG. 6, four successive and different matrix-matrix multiplications are executed, each using only a single weight set and requiring *T* compute cycles. In this case, it is possible to iteratively load the weight sets to prefetch S115 the weights for the next matrix-matrix, e.g., from an external memory. As another example, a first matrix multiplication uses two weight sets, while a third and fourth matrix multiplications require only one weight set. In that case, the weight sets for the third and fourth matrix multiplication can be prefetched during the time the two weight sets for the first matrix multiplication are being used for computation. Such prefetching strategies can lead to significant speedups, as the weight loading times can be partially hidden through pipelining in that case (as shown in FIG. 6), contrary to prior crossbar array structures that employ only a single weight set.

Note, in that respect, that the cycles shown on top in FIG. 6 corresponds to cycles performed with a usual crossbar array, where each cell stores a single weight value. The loading steps (to load the weights into this array) and the processing steps must be interleaved, such that loading times cannot be hidden through pipelining. On the contrary, in an array storing multiple weight sets, the matrix coefficients can possibly be preloaded into unused memory elements, while other weight sets are currently active. This can lead to a significant additional speedup in processing time compared with systems relying on a single weight set.

Referring to FIGS. 3B, 3C, and 7, the required weights can advantageously be preferably enabled S70 all at once, and almost instantaneously. For example, *N* × *M* weights can be enabled S70 by concomitantly selecting the *k*^{th} weight of the *K* weights of each memory system 157 and setting each weight accordingly selected as a currently active weight, where 1 ≤ *k* ≤*K.* Depending on the circumstances, the weight selection may be done for the whole the *N* × *M* memory systems 157, or only a subset thereof, e.g., a subarray. For example, where a sub-sized vector of *L* components (*L* < *N*) is to be multiplied by an *L* × *L* matrix, the corresponding weight array can be selected and set, without it being needed to enable to remaining weights, since the remaining components of the sub-sized vector can be set to zero (zero-padding). In all cases, several weights may possibly be concomitantly selected and set. As a result, changing context is almost instantaneous. That is, switching from one weight set to another does not introduce any substantial downtime. This can be achieved with a selection circuit involving multiplexers 159, such as depicted in FIGS. 3B and 3C, for example.

In practice, several compute cycles will likely have to be successively performed, as assumed in FIGS. 5A, 5B, and 7. Up to *K* cycles can be successively performed by locally switching weights. That is, the present methods will likely perform S60 - S100 several matrix-vector calculation cycles, where each cycle comprises: (i) enabling S70 a new set of *N* × *M* active weights; (ii) performing S84 MAC operations based on the enabled weights and an associated *N*-vector; and (iii) reading out S90 output signals obtained in output of the *M* output lines 153 to obtain corresponding values. Each time, a new set of *N* × *M* weights is enabled S70 for the *N* × *M* cells 155 by selecting, for each memory system 157, a weight from its *K* weights and setting the selected weight as an active weight. In order to perform S84 the MAC operations, signals encoding an *N-vector* are applied S82 to the *N* input lines 152 of the crossbar array structure 15, which causes the latter to perform S84 the MAC operations, based on this *N-*vector and the new set of *N* × *M* active weights.

That is, input signals are repeatedly applied to the *N* input lines 152 to successively feed *N-*vectors and cause MAC operations to be accordingly performed. As noted earlier, each *N-*vector may in fact correspond to a portion of a larger input vector (e.g., from a given input matrix), which is assigned a respective block matrix, as illustrated in FIG. 5A. In that case, the N-vectors fed into the crossbar array at each matrix-vector calculation cycle differ. In other cases, though, a same N-vector may possibly be successively applied several times, this depending on the operation decomposition scheme decided upstream at step S30 (FIG. 7).

In all cases, a new set of active weights may locally be enabled at and for each of the matrix-vector calculation cycles performed, without incurring intermediate programming steps to change the weights. As noted earlier, this may of course be subject to possible prefetching operations, which are nevertheless hidden through pipelining. I.e., *q* sets of *N* × *M* weights may possibly be prefetched S115 and stored (in place of *q* previous weight sets), prior to completing *K* matrix-vector calculation cycles. For example, a single set of *N* × *M* weights may be prefetched at each iteration (*q =* 1). In variants, two sets of *N* × *M* weights may be prefetched after completing every second iterations. Various other prefetching schemes can be contemplated. Note, such prefetching schemes may possibly be adapted dynamically, depending on the workload.

Moreover, for operations involving large operands, the partial results obtained at the end of each intermediate cycle may advantageously be accumulated, locally. That is, after some of the compute cycles, partial product results may be accumulated S90 at the device 10, 10a (in output of the crossbar array structure 15). I.e., accumulations are successively performed, with a view to later recomposing a final result. The final result is obtained based on the successive accumulations. The final results may for instance be returned to an external memory unit 2, upon completing a given number of compute cycles. Interestingly, because new weight values may possibly be prefetched S115 in-between, further matrix-vector calculation cycles can be performed, uninterruptedly, while keeping on accumulating partial results.

Thanks to the partial accumulations, only the final result of the matrix-vector calculation need be transferred and written to the external memory, without incurring idle times due to intermediate transfers of updated weights and partial results. Note, where a matrix-matrix multiplication is performed, the final outcome of each matrix-vector product may possibly be stored locally at the device 10 too. Only the result the matrix-matrix multiplication would then have to be returned to the external memory unit 2. In both cases, some results are locally obtained, based on the successive accumulations, prior to transferring final results to an external entity. The partial results do not need to be transferred to the external entity; they do not even need to be stored and are in fact deleted because of the successive accumulations.

Consider the example of FIG. 5A, in view of the flow of FIG. 7. Here the aim is to perform a matrix-matrix multiplication. This, as noted earlier, can be decomposed into *K* × *T* matrix-vector calculation cycles, where *T* corresponds to the number of columns of one of the input matrices, accordingly decomposed into *T* input vectors. In turn, each input vectors can be decomposed into *K* sub-vectors, i.e., *N*-vectors of *N* components each, where each *N*-vector is associated with a respective block matrices. I.e., each input vector of *K* × *N* components is associated with *K* block matrices, the latter corresponding to *K* sets of *N* × *M* weights. Then, the *K* × *T* matrix-vector calculation cycles can be performed S50 - S110 as follows. First, *K* sets of *N* × *M* weights (corresponding to the *K* block matrices) need be loaded S55 and accordingly programmed in the memory systems 157, for the latter to store the *K* sets of *N* × *M* weights. Next, calculation cycles are performed for each *N*-vector (i.e., each of the *K* sub-vectors, see steps S60 - S100) of each of the *T* input vectors (see steps S58 - S110). That is, the loops pertaining to *N*-vectors are nested in the loops for input vectors, which may themselves be nested in the loops for input matrices (steps S50 - S120), if necessary.

The most inner loop (pertaining to *N*-vectors) obeys the same principle as recited earlier. Namely, *N* × *M* active weights are enabled S70 as currently active weights, which weights correspond to the block matrix associated with a current *N*-vector, as previously assigned. Then, signals encoding the current *N-vector* are applied S82 to the *N* input lines 152, for the crossbar array structure 15 to perform S84 MAC operations based on this *N*-vector and the currently active weights. The output signals obtained in output of the *M* output lines 153 are then read out to obtain corresponding partial values, which can advantageously be accumulated S90 at the device 10. I.e., the partial values obtained for each N-vector (but the very first one) can be locally accumulated S90 with partial values as previously obtained for a previous *N-*vector. This way, updated results are obtained at each cycle. The updated results obtained last are eventually returned S 120 to an external memory.

Such operations are visually depicted in FIG. 5A, where *K* is assumed to be equal to 4 in this example. That is, the matrix-matrix multiplication is to be computed in 4 *T* calculation cycles, and each of the *T* input vectors has 4 × *N* components, as seen in FIG. 5A. In addition, the sequence of operations assumes *T* = 4 input vectors in this example. Every block matrix is stored as a single *N* × *M* weight set. The arithmetic units in the IMC array compute a partial dot-product for every pair of *N*-vector and associated weight set. FIG. 5A illustrates how the array switches context (i.e., weight sets) at every calculation cycle and computes the full result locally in an accumulator. Only after the last iteration, the final result is written back to the external memory. That is, the accumulator successively accumulates the 4 partial products and eventually writes the result back to the external memory. This process is repeated *T* times, i.e., once for every input vector.

FIG. 5B illustrates the timing. First all weight sets (WS0 - WS3) are successively loaded into the IMC, which corresponds to step S55 in FIG. 7. Then, the compute cycles start, in an interleaved fashion. Only four input vectors are involved (*T* = 4), each being decomposed in *K* = 4 sub-vectors of *N* components. The weight sets WS0 - WS3 are sequentially enabled (i.e., rotated), in accordance with each of the *K* portions of each of the *T* input vectors.

Because the four weight sets available are being used in this example, all the required weight sets can be preloaded S55 in the array 15 beforehand, without requiring any prefetching. That is, the decomposition assumed in the flow of FIG. 7 does, *a priori,* not require prefetching weights, because the matrix-vector operations already exploit rotations of the full *K* weight sets in this example, such that there is no room left (and, in fact, no need) for proactively fetching the next weight sets.

However, prefetching may become advantageous, should the input vectors have to be decomposed in more than *K* portions. Plus, even in the context of FIGS. 5A and 7, new weights may possibly be prefetched while processing the last *K* sub-vectors, corresponding to the very last input vector. I.e., upon completing an operation cycle for any of these *K* sub-vectors, instruction can be given to prefetch a new weight set and write it in place of the *N* × *M* weights that were previously active. This reduces the idle time period (corresponding to step S55), prior to starting S50 computations related to another matrix-matrix multiplication.

Of course, FIGS. 5A and 7 reflect one possible mapping of operations. Various other computational strategies may be contemplated at step S30, leading to different sequences of operations. In addition, it is worth noting that, irrespective of the decomposition scheme adopted at runtime, the core compute device 10 may generally be designed to allow prefetching weights, if needed.

The optimal mapping of operations is determined S30 by an external processing unit 2, 13, i.e., a unit separate from the core compute array 15. Still, this external processing unit 13 may possibly be co-integrated with the core IMC array 15 in the device 10, 10a, as assumed in FIG. 2B. In all cases, a processing unit 2, 13 is used to determine a computation strategy (i.e., identify sub-vectors and block matrices, and associate them), which operation can also be referred to as a conditioning operation. In practice, this operation amounts to mapping S30 a given problem onto a given number of sub-vectors and *K* sets of *N* × *M* weights. This step is performed prior to accordingly programming S55 the *N* × *M* memory systems 157 and encoding the computed vectors into input signals, with a view to subsequently performing the MAC operations. The processing units 2, 13 may possibly execute other tasks, as discussed later.

In embodiments, the MAC operations are performed S84 bit-serially, i.e., in *P* serial cycles, where *P* ≥ 2. In practice, *P* is typically equal to 2*^{r}* , where 3 ≤ *r* ≤ 6. *P* is assumed to be equal to 8 in the example of FIG. 4A. The value *P* corresponds to the bit width of each of the *N-*vectors used in input. Note, partial product values need be locally accumulated S86 in that case, upon completing each of the *P* cycles. The compute cycles S82 - S88 are sub-cycles that need be distinguished from the matrix-vector calculation cycles (S50 - S100), which may themselves benefit from partial accumulations S90. I.e., each inner compute cycle S80 includes *P* cycles, whereas the matrix-vector calculation cycles include *K* cycles (themselves nested in *T* cycles).

In variants, the present methods rely on a parallel implementation (see FIG. 4B), which does not require any parallel-to-serial conversion as in FIG. 4A. In parallel implementations, each N-vector is processed with weight multiplication in a single cycle. In further variants, hybrid approaches can be contemplated, involving parallel feed of bit-serial values.

Another aspect of the invention concerns a computer program for in-memory processing. The computer program product includes a computer readable storage medium having program instructions embodied therewith, where the program instructions are executable by processing means 12, 13, 14 of an in-memory processing hardware device 10, 10a, to cause the latter to perform steps as described above, starting with MAC operations S84, as well as accumulations S86, S90 and prefetching S115 operations, if necessary. More generally, such processing means 12, 13, 14 take care of some of (or possibly all) pre-processing and post-processing operations, as suggested in FIG. 2B. These operations can for example be executed on an instruction-based processor, or on dedicated accelerators with various instruction or command-based control mechanisms.

Note, apart from operations S30 aiming at determining the computation strategy, the unit 13 may possibly perform other tasks, e.g., related to element-wise or nonlinear operations. For example, in machine learning (ML) applications, the unit 13 may perform feature extraction, to convert some input data (e.g., images, sound files, or text) into vectors, which vectors are subsequently used to train a cognitive model or for inferencing purposes, using the crossbar array structure 15, 15a. In that respect, one or more neuron layers may possibly be mapped onto an array 15, 15a, depending on the partition of the array. Still, the units 12 - 14 may possibly collect outputs from the array, (if necessary) process such outputs, and re-inject them as new inputs to the array, so as to map multiple layers of a deep neural network, for example. that are needed to be performed. ML operations (such as feature extraction) may notably require performing depth-wise convolutions, pooling/un-pooling, etc. Similarly, the post-processing unit 14 may be leveraged to perform affine scaling of the output vectors, apply nonlinear activation functions, etc.

More generally, the units 12 - 14 may perform various operations, these depending on the actual applications. Moreover, such operations may be partly performed at a client device 3 and an intermediate device 2. Various computational strategies can be devised, which may depend on the application.

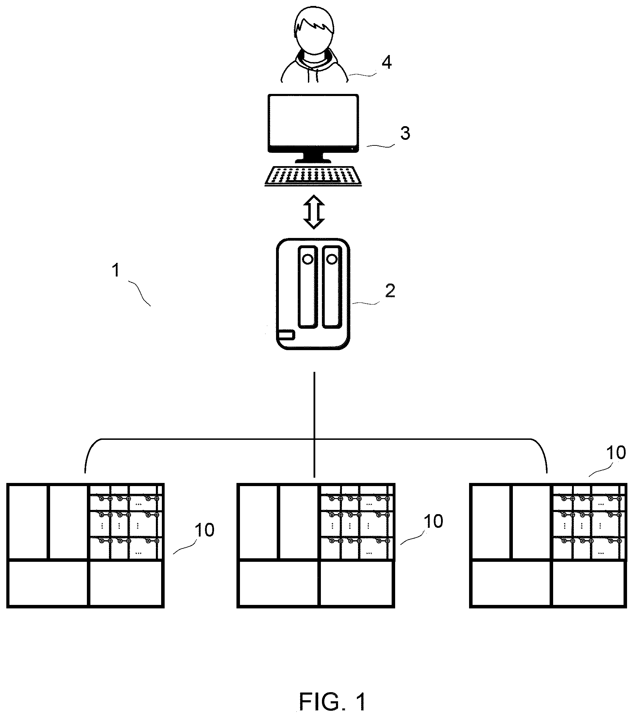

Referring back to FIGS. 1 - 4B, a further aspect of the invention is now described in detail, which concerns an in-memory processing hardware device 10, 10a. Functional and structural features of this device have already been described in reference to the present methods. Such features are only briefly described in the following.

Consistently with the present methods, the device 10, 10a comprises a crossbar array structure 15 such as shown in FIG. 2A. I.e., the array 15 includes *N* input lines 152 and *M* output lines 153, interconnected at cross-points defining *N* × *M* cells 155. Each cell 155 includes a respective memory system 157, each designed to store *K* weights. The array 15 is designed to perform MAC operations.

The device 10, 10a further includes a selection circuit 159, such as shown (partially) in FIG. 3B. The selection circuit 159 is connected to the *N* × *M* memory systems 157. This circuit 159 is generally configured to select a weight from the *K* weights of each memory system and set the selected weight as an active weight. This makes it possible to enable *N* × *M* active weights for *the N* × *M* cells 155.

The device 10, 10a also includes an input unit 151, 151a, which is configured to apply signals encoding *N*-vectors to the *N* input lines 152 of the array 15. This causes the array 15 to perform MAC operations based on an *N*-vector and corresponding *N* × *M* active weights, as enabled by the selection circuit 159, in operation.

**In** addition, a readout unit 154 is configured to read out output signals obtained in output of the M output lines 153 and, if necessary, accumulate partial output values, as discussed earlier. Again, the readout unit should be understood in a broad sense. E.g., it may include accumulators 154, 154a, and/or memory elements storing such output values. In analogue implementations, the readout unit may further include analogue-to-digital converters.

Each of the *N* × *M* memory systems 157 is preferably designed so that its *K* weights are independently programmable. As seen in FIG. 3B, the device 10, 10a may include a programming circuit 158, which is connected to each memory system 157. As said, only a portion of the programming circuit 158 is shown in FIG. 3B, which is a portion connected to a respective memory system. As a whole, the programming circuit 158 is configured to program the *K* weights of each of the *N* × *M* memory systems. Because the *K* weights of every memory systems are independently programmable, any of the *K* weights that is not currently set as an active weight may potentially be (re)programmed even if another one of the *K* weights is currently set as an active weight, which allows weights to be proactively loaded (prefetched), in operation.

That is, the programming circuit 158 may advantageously be configured to prefetch q sets of *N* × *M* weights that are not currently set as active weights, and accordingly program the *N* × *M* memory systems 157, for the latter to store the prefetched weights in place of *q* sets of *N* × *M* weights, where 1 ≤ *q* ≤ *K -* 1. Thus, in operation, the programming circuit 158 may program each of the *N* × *M* memory systems 157 to change the weights that are not currently set as active weights, while the crossbar array structure 15 is already performing MAC operations based on weights that are currently active.

Note, the programming circuit 158 must be sufficiently independent of the compute circuit 15, so as to be able to proactively reprogram weights that are currently inactive, while the compute circuit is performing MAC operations based on the currently active weights. This independence makes it possible to proactively load those weights that will be needed for next cycles of operations. Prefetching operations may for instance be performed for several sets of weights at a time. Various prefetching schemes can be contemplated, as noted earlier.

The programming circuit 158 may for instance connect a local memory unit 11 to the configuration and control logic circuit 12, as assumed in FIG. 2B. Although analogue implementations may, in principle, reuse the input lines 152 to program the memory systems 157, a separate programming circuit is preferably provided, so as to be able to reprogram the memory systems 157 during the calculation cycles. Similarly, digital memory cells (i.e., cells comprising digital memory elements) can be connected to dedicated lines, e.g., embodying word lines and bit lines for write operations in SRAM memory devices. Note, contrary to the depiction of FIG. 3B, the selection circuit 159 may possibly re-use the word lines and bit lines for read operations. Thus, the selection circuit and the programming circuit may actually partly overlap.

In the examples of FIG. 3A and 3B, each of *the N* × *M* memory systems 157 includes *K* distinct memory elements, for simplicity. Each memory element is adapted to store a respective weight. In that case, the selection circuit 159 may include *N* × *M* multiplexers. Each multiplexer is connected to all memory elements of a respective memory system 157, as shown in FIG. 3B. In addition, selection control lines are connected to each multiplexer, so as to allow any of the *K* weights of each memory system 157 to be selected and set as an active weight, in operation. Selection bits can be conveyed through control lines to select the active weight, as illustrated in FIG. 3C.

In the example of FIG. 3C, the multiplexer is a channel multiplexer using inverters and logic "NAND" gates to arrive at a common output X. I.e., the combinational logic circuit switches one of several input lines A, B, C, D to a single common output line X. The data lines A, B, C, D correspond to *W*_{1,1,0}, *W*_{1*,*1,1}*_{,} W*_{1,1,2}, *W*_{1,1,3} in FIG. 3B. The data select lines (carrying the binary input addresses) are defined by Add₀ and Add₁, respectively corresponding to least significant bits (LSB) and most significant bits (MSB). *N* × *M* multiplexers are used to switch the weights of the *N* × *M* memory systems. In principle, there are at most 2 × *N* × *M* control lines, i.e., two control lines per multiplexer 159, to allow individual control of each multiplexer. However, in practice, control lines can be shared across the multiplexers, possibly all multiplexers, especially where one wishes to simultaneously select weights sets, as discussed below. Thus, all control lines are preferably shared, which allows the same index *K* for every element in the *M* × *N* memory system to be simultaneously selected. In such cases, the number of control lines can be reduced to Log₂(*K*) lines.

Similarly, the programming circuit 158 may involve *N* × *M* demultiplexers, where the same control bit lines are used for the whole array 15. Again, a single demultiplexer 158 is shown to be connected to a respective memory system 157 in FIG. 3B, for simplicity. However, in practice, there are *N* × *M* demultiplexers 158 and *N* × *M* multiplexers 159 connected to respective memory systems 157. In variants, the programming circuit 158 and the selection circuit 159 may include other types of electronic components, where such components are arranged in each cell or, at least, connect to each cell, as necessary to program and select the memory values. In further variants, each memory system is configured to store *K* distinct values at respective local addresses, instead of being composed of *K* distinct memory elements.

As noted earlier, the required weights are preferably enabled S70 all at once. To that aim, the selection circuit 159 may advantageously be configured to select a subset (at least) of *n* × *m* weights from one of the *K* sets of *N* × *M* weights. This is most efficiently achieved by concomitantly selecting the *k*^{th} weight of the *K* weights of each memory system of a subset of *n* × *m* memory systems 157, where 2 ≤ *n* ≤ *N,* 2 ≤ *m* ≤ *M,* and 1 ≤ *k* ≤ *K.* As indicated earlier, enabling weights of an *n* × *m* subarray may be advantageous for those matrix-vector calculations where not all the *N* × *M* weights must be switched, which depends on how the problem is initially mapped onto the *N* × *M* cells 155. Note, switching operations may infrequently have to be performed for a single cell (i.e., *n =* 1 and *m* = 1). In practice, however, weight selections mostly come to be performed simultaneously for a large subset of the *N* × *M* memory systems (i.e., *n >* 1 and *m >* 1), or even all of the *N* × *M* memory systems, especially where large operands matrices are involved, as in examples of applications discussed earlier in reference to FIG. 5A, 5B, and 7. In variants, though, the selection circuit 159 may systematically select a set of *N* × *M* weights from one of the *K* sets of *N* × *M* weights, by concomitantly selecting the *k*^{th} weight of the *K* weights of each of the *N* × *M* memory systems, so as to systematically switch all memory systems 157 simultaneously. Thus, in general, the selection circuit 159 is configured to select a set of *n* × *m* weights and set the latter as active weights, for *n* × *m* memory systems of the array 15, where 1 *≤ n* ≤ *N* and 1 *≤ m* ≤*M*.

The device 10, 10a typically includes a sequencer circuit, which is connected to the input unit 151, 151a and the selection circuit 159. The sequencer circuit orchestrates operations of the input unit 151, 151a and the selection circuit 159, so as to successively perform several cycles of matrix-vector calculations as described earlier. I.e., such operations are based on N-vectors. Each cycle of matrix-vector calculations involves one or more cycles of MAC operations (depending on whether the MAC operations are performed bit-serially fed or not) and a distinct set of *N* × *M* weights, the latter selected from the *K* sets of *N* × *M* weights and set as *N* × *M* active weights at each cycle. The sequencer circuit, the programming circuit 158, and the input circuit 151, preferably form part of a same configuration and control logic circuit, which typically includes an on-chip logic unit 12, as assumed in FIG. 2B. That is, the sequencer function is preferably performed by the logic unit 12, just like other configuration and control functions.

In addition, the device 10, 10a may include an accumulator circuit 154, 154a, which is configured to accumulate partial product values obtained upon completing each matrix-vector calculation. Again, in bit-serial applications, each cycle of matrix-vector calculation involves several MAC cycles S80, due to the bit-serial operations, as in embodiments discussed earlier in reference to FIG. 7. There, additional accumulations S86 have to be performed. In variants relying on parallel implementations (not requiring parallel-to-serial conversion 151a), the full input is executed with weight multiplication in a single cycle. In all cases, the active weights remain the same during each matrix-vector calculation cycle.

As seen in FIGS. 4A and 4B, the accumulator circuit 154, 154a can be arranged in output of the output lines 153. Accumulators are known *per se.* The accumulator circuit 154, 154a may notably form part of a readout unit (not shown). In variants, accumulators may possibly be arranged in each cell, notably to accumulate S86 values obtained during bit-serial operations at the level of each cell.

As said, each of the *N* × *M* memory systems 157 preferably includes *K* distinct memory elements, for simplicity. Each memory element is adapted to store a respective weight. Such memory elements can notably be digital memory elements, such as static random-access memory (SRAM) devices. In variants, the memory elements are analogue memory elements. In that case, each multiply-accumulate operation, i.e., Σ*ᵢ W_{i,j,k} xᵢ,* is performed analogically and the output signals are translated to the digital domain (if necessary) using analogue-digital converter (ADC) circuitry. The memory elements may optionally be non-volatile memory elements. More generally, the present invention is compatible with various types of electronic memory devices (e.g., SRAM devices, flash cells, memristive devices, etc.). Any type of memristive devices can be contemplated, such as phase-change memory cells, resistive random-access memory (RRAM), as well as electro-chemical random-access memory (ECRAM) devices.

In preferred embodiments, though, each of the *K* memory elements is a digital memory element such as an SRAM device. In that case, each cells 155 further includes an arithmetic unit 156 (including a multiplier and adder tree), which is connected to each of the *K* memory elements of a respective memory system 157 via a respective selection circuit portion 159 (e.g., via a multiplexer). Note, each cell is physically connected to each memory element via a selection circuit component (such as a multiplexer or any other selection circuit component) but is logically connected to only one such element at a time, by virtue of the selection made by the selection circuit.

In bit-serial implementations (FIG. 4A), each memory element is designed to store a P-bit weights. The input unit 151 is configured to apply input signals, so as to feed components of the N-vectors bit-serially to the input lines 152 in *P* cycles (*P* ≥ 2); each vector component corresponds to a P-bit input word. The *N* × *M* cells 155 must then be designed to perform S80 MAC operations in a bit-serial manner (i.e., in P cycles). Thus, the hardware device 10 must include an accumulator circuit 154 to accumulate values corresponding to partial, bit-serial product values as obtained at each of the *P* cycles, this corresponding to step S86 in FIG. 7. Meanwhile, the selection circuit 159 must maintain a same set of *N* × *M* weights as active weights during each of the *P* cycles.

As an example of implementation, assume that: (i) the crossbar array is an *N* × *M* = 512 × 512 array; (ii) *K =* 4, such that 4 switchable sets of *N* × *M* weights are available in total; and (iii) the input-sample bit-width (IBW) is equal to *P* = 8 bits, such that the weight bit-width (WBW) is equal to 8 bits too, as in FIG. 4A. The IMC device 10 takes in an *N*-vector of 512 components (each component corresponds to an 8-bit input words). Each vector component is fed bit-serially in *P* = 8 cycles. The IMC device 10 maps 512 × 512 × 4 weights (of 8-bit each) in total. Only one of the weight sets is active for processing during every cycle of the P cycles S80. As noted earlier, the bit-serial cycles S80 should not be confused with the matrix-vector calculation cycles (S60 - S100). At every cycle S80, all *N* input bits (one per row) are multiplied with M weights (one per column). The partial products obtained can be stored as a 17-bit value (as WBW + Log₂(*N*) = 17), which is accumulated over IBW = 8 cycles in the accumulator 154 below the IMC 15 to eventually generate (S88: Yes) the full vector product, i.e., the final result for this calculation cycle S80.

Moreover, the arithmetic units in the IMC array compute a partial dot-product for every pair of *N*-vector and associated block matrix. The accumulator 154 may further be used to accumulate S90 the *K* partial products, prior to writing the final result back to an external memory. The IMC switches context (weight set) at every matrix-vector calculation cycle. This process can be repeated for every input vector. For example, a programmable accumulator can be programmed to accumulate several intermediate output values, e.g., as obtained after a shift and invert operation. Thus, if an 8-bit, bit-serial IMC implementation is used with *K* weight sets, then the accumulators 154 may internally accumulate *K* × 8 (17-bit) values that are appropriately shifted depending on the iteration of the bit-serial sequence. If *P* = 8, *K* = 4 and *N =* 512, the final bit-width of the output accumulator is 27 bit. The 27 bit are computed as follows: in each iteration of the bit-serial process, 512 8-bit multiplied values are accumulated, which requires 17 bit to represent. The 17-bit values are shifted and accumulated in 8 cycles, where the resultant value requires 25 bits in order to be fully represented. The accumulator can repeat this cycle for *K* = 4 different weight sets, eventually requiring 27 bits to represent the final result.

In general, the parameters *N, M, P,* and *K,* can take various possible values. The values indicated above are just examples. In variants relying on parallel implementations, such as illustrated in FIG. 4B, no parallel-to-serial conversion is needed. Rather, the vector components are fed, via an input unit 151a, in parallel, to each of the *M* cells of the corresponding input line 152. The full input is executed (with weight multiplication) in a single cycle. The accumulator 154a is used to accumulate S90 partial products resulting from the current *N*-vector and the associated matrix block. No intermediate accumulation is needed in that case for the MAC operations.

Whether based on bit-serial or parallel implantations, the hardware device 10, 10a may integrate a configuration and control logic 12, which is connected to each of the input unit 151, 151a and the selection circuit 159, as in FIG. 2B. In addition, a pre-data processing unit 13 may be connected to the configuration and control logic 12 (so as to suitably partition the problem into *N*-vectors and block matrices and instruct operations). For completeness, a post-data processing unit 14 may be connected in output of the output lines 153, e.g., in output of the accumulators 154, 154a, so as to suitably re-arrange output data, if necessary, and instruct to store them in a local or nearby memory (e.g., memory 11) or return them to an external entity 2, see FIG. 1.

In that respect, another aspect of the invention concerns a computing system 1. The system 1 may notably include one or more in-memory processing hardware devices 10, 10a, such as described above. The computing system may for example have a client-server configuration, as assumed in FIG. 1. I.e., a user 4 may interact (via a personal device 3) with a server 2, with a view to performing computations. The latter may notably require substantial matrix-matrix or matrix-vector multiplications to be performed, in which case the server 2 may decide to offload such computations to hardware devices 10, 10a, acting as accelerators.

The server 2 may be regarded as aggregating an external memory unit with an external, general-purpose processing unit 2, where the latter is connected to the former, so as to read data from and write data to the memory unit 2, in operation. In addition, each of the in-memory processing hardware devices 10, 10a may be set in data communication with the server 2, so as to be able to read data from and write data back to the memory unit 2, as necessary to handle compute tasks forwarded by the server 2. Note, the general-purpose processing unit may possibly be configured to map the initial computing task (the problem to be solved) onto N-vectors and corresponding block matrices.

Note, the external memory unit and the general-purpose processing unit form part of a same general-purpose computer 2 (i.e., a server) in the example of FIG. 1. However, in principle, the external processing unit and memory unit may possibly be provided in physically distinct machines. In further variants, the system 1 may also be configured as a cloud computing system and possibly use containerization technology. I.e., the present invention may notably be embodied as a cloud computing system or somehow be exploited as part of cloud-based services. The system 1 may further include a composable disaggregated infrastructure, which may notably include hardware devices 10, 10a, along with other hardware acceleration devices, e.g., ASICs and FPGAs. In all cases, data exchanges can be optimized, so as to speed up computations, as explained earlier.

The above embodiments have been succinctly described in reference to the accompanying drawings and may accommodate a number of variants. Several combinations of the above features may be contemplated. Examples are given in the next section.

### 2. Specific embodiments

Particularly preferred embodiments rely on an architecture such as shown in FIGS. 2A, 3A, and 4A, with SRAM memory elements. The area of the IMC chip is well balanced between arithmetic units (multipliers and adder trees) and memory elements, unlike prior crossbar arrays, the area of which is typically dominated by the closely-coupled arithmetic units rather than by the memory elements, which can be much more densely arranged. Apart from a better balance between memory and arithmetic areas, the proposed solution (with multiple weight sets) increases the flexibility of the IMC unit 15, allows mapping larger matrix-vector multiplications natively and prefetching weight sets. Each weight set represents a separate block matrix. The weights sets are nevertheless connected to the same arithmetic units, as seen in FIGS. 3A and 3B.

All the more, the proposed architecture and functionalities also offer higher efficiency (due to less interfacing with external memories, see FIGS. 5A and 5B) and faster runtimes (due to the possibility to prefetch weights for inactive weight sets, FIG. 6). This architecture notably relies on an accumulator circuit, which can accumulate partial products resulting from both the bit-serial cycles and the multiple weight sets. Thus, there is no need to write intermediate results to an external memory. This reduces the amount of read/writes significantly, i.e., from 2 *K -* 1 (where only one weight set can be locally stored) to 1 (where *K* weight sets are locally stored).

As seen in FIG. 7, a typical flow of operations is the following, assuming a bit-serial implementation (reference is further made to FIGS. 2A - 4A). A device 10 including a crossbar array structure 15 is provided at step S10, e.g., the device 10 is set in data communication with a server 2. At step S20, the server 2 receives a request (from a user 4, who can be a computerized client), which requires performing matrix-matrix multiplications. The computation strategy is determined at step S30, either by processing means of the server 2 or by an embedded processing unit 13. This results in associating *N*-vectors with respective block matrices. The matrix-matrix multiplication cycles are started at step S40. A next iteration starts at step S50, whereby a given input matrix of *T* columns is selected. As a result of the computation strategy, *K* sets of *N* × *M* weights are loaded at step S55. The *K* weight sets correspond to the *K* block matrices to be used sequentially during the calculation cycles. The memory elements are accordingly programmed. The next input vector (of *K* × *N* components) of the current input matrix is selected at step S58 and padded, if necessary. The next sub-vector (i.e., an *N-vector* of *N* components) of this input vector is selected at step S60, together with the corresponding block matrix. At step S70, the corresponding *N* × *M* weights are locally enabled as active weights.

The block matrix computations start at step S80. At step S82, a loop is started, to bit-serially feed the next bits (of the vector components of the current *N-vector*) into the *N* input lines of the array 15. The bit-serial MAC operations are performed at step S84. Partial results are accumulated at step S86. The process repeats (S88: No) until all P bit-serial cycles have completed (S88: Yes). The processing of the current *N*-vector is completed upon completion of all *P* bit-serial cycles.

The intermediate matrix-vector product obtained with this *N*-vector is accumulated S90 with previous matrix-vector products, if necessary. I.e., all intermediate matrix-vector products are accumulated but the very first one. Intermediate matrix-vector product calculation cycles (S60 - S100) are repeated until all sub-vectors have been processed for multiplication by the associated block matrices (S100: Yes). The loop on input vectors (S50 - S110) repeats for all input vectors. Once all vectors have been processed (S110: Yes), the final result for the current input matrix is returned S120 to the calling entity 2, 13. In variant, this result may be locally stored until all input matrices (S50 - S120) have been processed. Only then would the results pertaining to all input matrices be returned.

### 3. Final remarks

Computerized devices 10, 10a and systems 1 can be suitably designed for implementing embodiments of the present invention as described herein. In that respect, it can be appreciated that the methods described herein are essentially non-interactive, i.e., automated. Automated parts of such methods can be implemented in hardware only, or as a combination of hardware and software. In exemplary embodiments, automated parts of the methods described herein are implemented in software, as a service or an executable program (e.g., an application), the latter executed by suitable digital processing devices. However, all embodiments described here involve computations performed thanks to crossbar array structures adapted to store multiple weight sets, possibly using prefetching and accumulation capability of the devices 10, 10a.

Still, the methods described herein may typically involve executable programs, scripts, or, more generally, any form of executable instructions, be it to instruct to perform core computations at the devices 10, 10a. The required computer readable program instructions can for instance be downloaded to processing elements from a computer readable storage medium, via a network, for example, the Internet and/or a wireless network.

Aspects of the present invention are described herein notably with reference to a flowchart and block diagrams. It will be understood that each block, or combinations of blocks, of the flowchart and the block diagrams can be implemented thanks to computer readable program instructions. The flowchart and the block diagram in the accompanying drawings illustrate the architecture, functionality, and operation of possible implementations of the devices 10, 10a and, systems 1 involving such devices, methods of operating them, and computer program products, according to various embodiments of the present invention.

While the present invention has been described with reference to a limited number of embodiments, variants, and the accompanying drawings, it will be understood by those skilled in the art that various changes may be made, and equivalents may be substituted without departing from the scope of the present invention as defined in the appended claims. In particular, a feature (device-like or method-like) recited in a given embodiment, variant or shown in a drawing may be combined with or replace another feature in another embodiment, variant, or drawing, without departing from the scope of the present invention as defined in the appended claims. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope as defined in the appended claims. Therefore, it is intended that the present invention is not limited to the particular embodiments disclosed, but that the present invention will include all embodiments falling within the scope of the appended claims. In addition, many other variants than explicitly touched above can be contemplated. For example, other types of memory elements, selection circuits, and programming circuits can be contemplated.

## Claims

1. A method of in-memory processing, the method comprising:
providing (S10) a crossbar array structure (15) including *N* input lines (152) and *M* output lines (153), which are interconnected at cross-points defining *N* × *M* cells (155), where *N* ≥ 2 and *M* ≥ 2, the cells (155) including respective memory systems (157), each designed to store *K* weights, *K* ≥ 2, whereby the crossbar array structure (15) includes *N* × *M* memory systems storing *K* sets of *N* × *M* weights corresponding to *K* respective *N* × *M* matrices, wherein each of the *N* × *M* weights of each of the *K* sets represents a respective matrix coefficient of a respective one of the *K* respective *N* × *M* matrices;
enabling (S70) *N* × *M* weights as currently active weights for the *N* × *M* cells (155) by selecting, for each of the memory systems (157), a weight from its *K* weights and setting the selected weight as an active weight;
applying (S82) signals encoding a vector of *N* components to the *N* input lines (152) of the crossbar array structure (15) to cause the latter to perform (S84) a matrix-vector multiplication of a matrix corresponding to the *N* × *M* weights currently active and said vector by performing M multiply-accumulate operations, or MAC operations, based on said vector and the *N* × *M* weights currently active, theMMAC operations involving *N* × *M* multiplications and *N* × *M* additions; and
reading out (S86, S90) output signals obtained in output of the *M* output lines (153) to obtain *M* corresponding values of an output vector of said matrix-vector multiplication.

2. The method according to claim **1,** wherein a crossbar configuration of the crossbar array structure causes, upon applying (S82) the signals encoding the vector of N components to the *N* input lines (152), the *M* MAC operations to be performed in parallel.

3. The method according to claim **1** or **2,** wherein
the method further comprises, while performing MAC operations in accordance with *N* × *M* weights that are currently enabled as active weights, prefetching (S115) *q* sets of *N* × *M* weights to be used next and storing the prefetched weights in the *N* × *M* memory systems (157), in place of *q* sets of *N* × *M* weights that were previously active, where 1 ≤ *q* ≤ *K -* 1.

4. The method according to claim **1**, **2** or **3**, wherein
the *N* × *M* active weights are enabled (S70) by concomitantly selecting the *k*^{th} weight of the *K* weights of each memory system (157) of at least a subset of the *N* × *M* memory systems (157) and setting each weight accordingly selected as a currently active weight, where 1 ≤ *K* ≤ *K.*

5. The method according to any one of claims **1** to **4,** wherein
the method comprises performing (S58 - S110) several matrix-vector calculation cycles, each of the cycles comprising:
enabling (S70) a new set of *N* × *M* active weights for the *N* × *M* cells (155) by selecting, for each of the memory systems (157), a weight from its *K* weights and setting the selected weight as an active weight;
applying (S82) signals encoding a vector of *N* components to the *N* input lines (152) of the crossbar array structure (15) to cause the latter to perform (S84) MAC operations, based on the vector and the new set of *N* × *M* active weights; and
reading out (S86, S90) output signals obtained in output of the *M* output lines (153) to obtain corresponding values, and,
preferably, the method further comprises, at an external processing unit,
mapping (S30) a given problem onto a given number of sub-vectors and *K* sets of *N* × *M* weights, prior to programming (S55) the *N* × *M* memory systems (157) in accordance with the *K* sets of *N* × *M* weights and encoding the sub-vectors into input signals, with a view to applying (S82) such input signals to the *N* input lines (152) to perform the several matrix-vector calculation cycles.

6. The method according to claim **5,** wherein
each of the cycles further comprises accumulating (S90) partial product results corresponding to the output signals read out, whereby accumulations are successively performed, and,
preferably, the method further comprises, upon completing (S110: Yes) the several matrix-vector calculation cycles, returning (S120) results obtained based on the successive accumulations to an external memory unit (2).

7. The method according to claim **6,** wherein
the method further comprises, prior to completing *K* cycles of said several matrix-vector calculation cycles:
prefetching (S115) *q* sets of *N* × *M* weights and storing the latter in the *N* × *M* memory systems (157), in place of *q* sets of *N* × *M* previously enabled as active weights, where 1 ≤ *q* ≤ *K -* 1.

8. The method according to claim **7,** wherein
the method comprises performing (S50 - S110) *K* × *T* matrix-vector calculation cycles, where *T* corresponds to a number of input vectors, wherein each of the input vectors are decomposed into *K* sub-vectors of *N* components and is associated with *K* respective block matrices, the latter corresponding to *K* sets of *N* × *M* weights, whereby the *K* × *T* matrix-vector calculation cycles are performed by:
loading (S55) *K* sets of *N* × *M* weights corresponding to said *K* respective block matrices and accordingly programming the memory systems (157) for them to store the *K* sets of *N* × *M* weights; and
for each (S60) sub-vector of the *K* sub-vectors of each of the *T* input vectors,
enabling (S70) *N* × *M* active weights corresponding to an associated one of the *K* respective block matrices as currently active weights;
applying (S82) signals encoding a vector corresponding to said each sub-vector to the *N* input lines (152) to cause the crossbar array structure (15) to perform (S84) MAC operations based on said each sub-vector and the currently active weights, and
reading out output signals obtained in output of the *M* output lines (153) to obtain corresponding partial values,
and wherein, preferably,
reading out said output signals comprises accumulating (S90) the partial values obtained for said each sub-vector with partial values as previously obtained for a previous one of the *K* sub-vectors, if any, to obtain updated results, and
the method further comprises returning (S120) results obtained based on the updated results obtained last.

9. The method according to any one of claims **1** to **8,** wherein:
the *N* × *M* memory systems (157) are digital memory systems;
each of the *N* × *M* cells (155) further comprises an arithmetic unit (156) connected to a respective one of the *N* × *M* memory systems (157); and
the MAC operations are preferably performed (S84) bit-serially in *P* cycles, *P* ≥ 2, wherein *P* corresponds to a bit width of each of the *N* components of each of the vectors used in input, whereby partial product values are accumulated (S86) upon completing each of the *P* cycles.

10. A computer program for in-memory processing, the computer program product comprising a computer readable storage medium having program instructions embodied therewith, the program instructions executable by processing means of an in-memory processing hardware device (10) to cause the latter to perform the steps of any one of claims **1** to **9.**

11. An in-memory processing hardware device (10), wherein the device (10) comprises:
a crossbar array structure (15) including *N* input lines (152) and *M* output lines (153), which are interconnected at cross-points defining *N* × *M* cells (155), where *N* ≥ 2 and *M* ≥ 2, the cells (155) including respective memory systems (157), each designed to store *K* weights, *K* ≥ 2, whereby the crossbar array structure includes *N* × *M* memory systems (157) that are adapted to store *K* sets of *N* × *M* weights, wherein the *K* sets of *N* × *M* weights correspond to *K* respective *N* × *M* matrices, where each of the *N* × *M* weights of each of the *K* sets represents a respective matrix coefficient of a respective one of the *K* respective *N* × *M* matrices, the crossbar array structure configured to perform multiply-accumulate operations, or MAC operations;
a selection circuit (159) connected to the *N* × *M* memory systems (157), the selection circuit (159) configured to select a weight from the *K* weights of each of the memory systems and set the selected weight as an active weight, so as to enable *N* × *M* active weights as currently active weights for the *N* × *M* cells (155), in operation;
an input unit (151) configured to apply signals encoding a vector of *N* components to the *N* input lines (152) of the crossbar array structure (15) to cause the latter to perform a matrix-vector multiplication of a matrix corresponding to the *N* × *M* weights currently active and said vector by performing *M* MAC operations based on said vector and the *N* × *M* weights currently active, as enabled by the selection circuit (159), in operation; and
a readout unit (154) configured to read out output signals obtained in output of the *M* output lines (153) to obtain *M* corresponding values of an output vector of said matrix-vector multiplication, in operation,
wherein, preferably, a crossbar configuration of the crossbar array structure is configured to cause the *M* MAC operations to be performed in parallel, upon applying the signals encoding the vector of *N* components to the *N* input lines (152),
and wherein, preferably, the in-memory processing hardware device (10) further comprises:
a configuration and control logic (12) connected to each of the input unit (151) and the selection circuit (159);
a pre-data processing unit (13) connected to the configuration and control logic (12); and
a post-data processing unit (14) connected in output of the output lines (153).

12. The in-memory processing hardware device (10) according to claim **11,** wherein
each of the *N* × *M* memory systems (157) is designed so that its *K* weights are independently programmable; and
the device (10) further includes a programming circuit (158) connected to said each memory system (157), the programming circuit (158) configured to program the *K* weights of the *N* × *M* memory systems.

13. The in-memory processing hardware device (10) according to claim **12,** wherein the programming circuit (158) is further configured to
prefetch *q* sets of *N* × *M* weights that are not currently set as active weights, and
accordingly program the *N* × *M* memory systems (157), for the latter to store the prefetched weights in place of *q* sets of *N* × *M* weights, where 1 ≤ *q* ≤ *K -* 1.

14. The in-memory processing hardware device (10) according to any one of claims **11** to **13,** wherein
each of the *N* × *M* memory systems (157) includes *K* memory elements, each adapted to store a respective weight of the *K* weights, and
the selection circuit (159) includes *N* × *M* multiplexers, each connected to each of the *K* memory elements of a respective one of the *N* × *M* memory systems (157), as well as selection control lines, which are connected to each of the multiplexers, so as to allow any one of the *K* weights of each of the memory systems (157) to be selected and set as an active weight, in operation.
and wherein, preferably,
the selection circuit (159) is further configured to select a subset of *n* × *m* weights from one of the *K* sets of *N* × *M* weights, by concomitantly selecting the *k*^{th} weight of the *K* weights of each memory system (157) of a subset of *n* × *m* memory systems (157) of the *N* × *M* memory systems, where 2 ≤ *n* ≤ *N, 2* ≤ *m* ≤ *M* and *1* ≤ *K* ≤ *K.*

15. The in-memory processing hardware device (10) according to any one of claims **11** to **14,** wherein:
the in-memory processing hardware device (10) further comprises a sequencer circuit and an accumulator circuit (154);
the sequencer circuit is connected to the input unit (151) and the selection circuit (159) to orchestrate operations of the input unit (151) and the selection circuit (159), so as to successively perform several cycles of matrix-vector calculations based on one or more sets of vectors, wherein, in operation, each of the cycles of matrix-vector calculations involves one or more cycles of MAC operations, and a distinct set of *N* × *M* weights are selected from the *K* sets of *N* × *M* weights and set as *N* × *M* active weights at each of the cycles of matrix-vector calculations; and
the accumulator circuit (154) is configured to accumulate partial product values obtained upon completing each MAC operation cycle,
and wherein, preferably,
the accumulator circuit (154) is arranged in output of the output lines (153).

16. The in-memory processing hardware device (10) according to any one of claims **11** to **15,** wherein
each of the *N* × *M* memory systems (157) includes *K* memory elements, each adapted to store a respective weight of the *K* weights,
and wherein, preferably,
each of the *K* memory elements of each of the *N* × *M* memory systems (157) is a digital memory element, and
each of the *N* × *M* cells (155) further includes an arithmetic unit (156), which is connected to each of the *K* memory elements of a respective one of the *N* × *M* memory systems (157) via a respective portion of the selection circuit (159).

17. The in-memory processing hardware device (10) according to claim **16,** wherein
each of the *K* memory elements of each of the *N* × *M* memory systems (157) is designed to store a *P*-bit weights;
the input unit (151) is configured to apply said signals so as to bit-serially feed a vector of *N* components to the input lines (152) in *P* cycles, each of the *N* components corresponding to a *P*-bit input word, where *P* ≥ 2;
the *N* × *M* cells (155) are configured to perform MAC operations in a bit-serial manner in the *P* cycles;
the hardware device (10) further includes an accumulator circuit (154), which is configured to accumulate values corresponding to partial, bit-serial product values as obtained at each of the *P* cycles; and
the selection circuit (159) is configured to maintain a same set of *N* × *M* weights as active weights during each of the *P* cycles.

18. A computing system (1) comprising
one or more in-memory processing hardware devices (10), each according to any one of claims **11** to **17,** wherein, preferably, the computing system further comprises:
a memory unit (2) and a general-purpose processing unit (2) connected to the memory unit to read data from, and write data to, the memory unit (2), wherein
each of the in-memory processing hardware devices (10) is configured to read data from, and write data to, the memory unit (2), and
the general-purpose processing unit (2) is configured to map a given computing task to vectors and weights for memory systems (157) of the one or more in-memory processing hardware devices (10).

## Patentansprüche

1. Ein Verfahren zur In-Memory-Verarbeitung, wobei das Verfahren Folgendes umfasst:
Bereitstellen (S10) einer Kreuzschienen-Array-Struktur (15) mit *N* Eingangsleitungen (152) und M Ausgangsleitungen (153), die an Kreuzungspunkten miteinander verbunden sind, die *N* × *M* Zellen (155) definieren, wobei *N* ≥ 2 und *M* ≥ 2 ist, wobei die Zellen (155) jeweilige Speichersysteme (157) umfassen, die jeweils zum Speichern von *K* Gewichten eingerichtet sind, wobei *K* ≥ 2 ist, wodurch die Kreuzschienen-Array-Struktur (15) *N* × *M* Speichersysteme umfasst, die *K* Sätze von *N* × *M* Gewichten speichern, die *K* jeweiligen *N* × *M*-Matrizen entsprechen, wobei jedes der *N* × *M* Gewichte jedes der K Sätze einen jeweiligen Matrixkoeffizienten einer jeweiligen der *K* jeweiligen *N* × *M-*Matrizen darstellt;
Freigeben (S70) von *N* × *M* Gewichten als derzeit aktive Gewichte für die *N* × *M* Zellen (155) durch Auswählen, für jedes der Speichersysteme (157), eines Gewichts aus seinen *K* Gewichten und Festlegen des ausgewählten Gewichts als ein aktives Gewicht;
Anlegen (S82) von Signalen, die einen Vektor mit *N* Komponenten kodieren, an die *N* Eingangsleitungen (152) der Kreuzschienen-Array-Struktur (15), um zu bewirken, dass letztere eine Matrix-Vektor-Multiplikation (S84) einer Matrix, die den derzeit aktiven *N* × *M* Gewichten entspricht, und des genannten Vektors durchführt, indem M Multiplikations-Akkumulations-Operationen, oder MAC-Operationen, basierend auf dem genannten Vektor und den derzeit aktiven *N* × *M* Gewichten durchgeführt werden, wobei die M MAC-Operationen *N* × *M* Multiplikationen und *N* × *M* Additionen beinhalten; und
Auslesen (S86, S90) von Ausgangssignalen, die am Ausgang der M Ausgangsleitungen (153) erhalten werden, um M entsprechende Werte eines Ausgangsvektors der genannten Matrix-Vektor-Multiplikation zu erhalten.

2. Das Verfahren nach Anspruch 1, wobei eine Kreuzschienenkonfiguration der Kreuzschienen-Array-Struktur nach dem Anlegen (S82) der den Vektor aus *N* Komponenten kodierenden Signale an die *N* Eingangsleitungen (152) bewirkt, dass die *M* MAC-Operationen parallel ausgeführt werden.

3. Das Verfahren nach Anspruch 1 oder 2, wobei
das Verfahren weiter, während MAC-Operationen gemäss *N* × *M* Gewichten durchgeführt werden, die derzeit als aktive Gewichte freigegeben sind, das Vorabrufen (S115) von *q* Sätzen von *N* × *M* als nächstes zu verwendender Gewichte und das Speichern der vorab abgerufenen Gewichte in den *N* × *M* Speichersystemen (157) anstelle von *q* Sätzen von *N* × *M* Gewichten, die zuvor aktiv waren, umfasst, wobei 1 ≤ *q* ≤ *K -* 1 gilt.

4. Das Verfahren nach Anspruch 1, 2 oder 3, wobei die *N* × *M* aktiven Gewichte freigegeben werden (S70), indem gleichzeitig das k-te Gewicht der *K* Gewichte jedes Speichersystems (157) aus mindestens einer Teilmenge der *N* × *M* Speichersysteme (157) ausgewählt und jedes entsprechend ausgewählte Gewicht als ein derzeit aktives Gewicht festgelegt wird, wobei 1 ≤ *K* ≤ *K* gilt.

5. Das Verfahren nach einem der Ansprüche 1 bis 4, wobei das Verfahren das Durchführen (S58 - S110) mehrerer Matrix-Vektor-Berechnungszyklen umfasst, wobei jeder der Zyklen Folgendes umfasst:
Freigeben (S70) eines neuen Satzes von *N* × *M* aktiven Gewichten für die *N* × *M* Zellen (155) durch Auswählen, für jedes der Speichersysteme (157), eines Gewichts aus seinen *K* Gewichten und Festlegen des ausgewählten Gewichts als ein aktives Gewicht;
Anlegen (S82) von Signalen, die einen Vektor mit *N* Komponenten kodieren, an die *N* Eingangsleitungen (152) der Kreuzschienen-Array-Struktur (15), um zu bewirken, dass letztere MAC-Operationen (S84) basierend auf dem Vektor und dem neuen Satz von *N* × *M* aktiven Gewichten durchführt; und
Auslesen (S86, S90) von Ausgangssignalen, die am Ausgang der *M* Ausgangsleitungen (153) erhalten werden, um entsprechende Werte zu erhalten, und
wobei das Verfahren vorzugsweise weiter an einer externen Verarbeitungseinheit Folgendes umfasst:
Abbilden (S30) eines gegebenen Problems auf eine gegebene Anzahl von Teilvektoren und *K* Sätze von *N* × *M* Gewichten, vor dem Programmieren (S55) der *N* × *M* Speichersysteme (157) gemäss den *K* Sätzen von *N* × *M* Gewichten und dem Kodieren der Teilvektoren in Eingangssignale, im Hinblick auf das nachfolgende Anlegen (S82) solcher Eingangssignale an die *N* Eingangsleitungen (152), um die mehreren Matrix-Vektor-Berechnungszyklen durchzuführen.

6. Das Verfahren nach Anspruch 5, wobei
jeder der Zyklen weiter das Akkumulieren (S90) von Teilproduktergebnissen umfasst, die den ausgelesenen Ausgangssignalen entsprechen, wodurch Akkumulationen nacheinander durchgeführt werden, und
das Verfahren vorzugsweise weiter nach Abschluss (S110: Ja) der mehreren Matrix-Vektor-Berechnungszyklen das Zurückgeben (S120) von Ergebnissen, die basierend auf den aufeinanderfolgenden Akkumulationen erhalten wurden, an eine externe Speichereinheit (2) umfasst.

7. Das Verfahren nach Anspruch 6, wobei
das Verfahren weiter, vor dem Abschluss von *K* Zyklen der genannten mehreren Matrix-Vektor-Berechnungszyklen, Folgendes umfasst:
Vorabrufen (S115) von *q* Sätzen von *N* × *M* Gewichten und Speichern der letzteren in den *N* × *M* Speichersystemen (157) anstelle von *q* Sätzen von *N* × *M* zuvor als aktive Gewichte freigegebener Gewichte, wobei 1 ≤ *q* ≤ *K* - 1 gilt.

8. Das Verfahren nach Anspruch 7, wobei
das Verfahren das Durchführen (S50 - S110) von *K* × *T* Matrix-Vektor-Berechnungszyklen umfasst, wobei *T* einer Anzahl von Eingabevektoren entspricht, wobei jeder der Eingabevektoren in *K* Teilvektoren mit *N* Komponenten zerlegt ist und *K* jeweiligen Blockmatrizen zugeordnet ist, wobei letztere *K* Sätzen von *N* × *M* Gewichten entsprechen, wodurch die *K* × *T* Matrix-Vektor-Berechnungszyklen durchgeführt werden durch:
Laden (S55) von *K* Sätzen von *N* × *M* Gewichten, die den genannten *K* jeweiligen Blockmatrizen entsprechen, und entsprechendes Programmieren der Speichersysteme (157), damit diese die *K* Sätze von *N* × *M* Gewichten speichern; und
für jeden (S60) Teilvektor der *K* Teilvektoren jedes der T Eingabevektoren,
Freigeben (S70) von *N* × *M* aktiven Gewichten, die einer zugeordneten der *K* jeweiligen Blockmatrizen entsprechen, als derzeit aktive Gewichte;
Anlegen (S82) von Signalen, die einen Vektor kodieren, der dem genannten jeweiligen Teilvektor entspricht, an die *N* Eingangsleitungen (152), um zu bewirken, dass die Kreuzschienen-Array-Struktur (15) MAC-Operationen (S84) basierend auf dem genannten jeweiligen Teilvektor und den derzeit aktiven Gewichten durchführt, und
Auslesen von Ausgangssignalen, die am Ausgang der M Ausgangsleitungen (153) erhalten werden, um entsprechende Teilwerte zu erhalten,
und wobei vorzugsweise,
das Auslesen der genannten Ausgangssignale das Akkumulieren (S90) der für den genannten jeden Teilvektor erhaltenen Teilwerte mit zuvor für einen vorherigen der *K* Teilvektoren, falls vorhanden, erhaltenen Teilwerten umfasst, um aktualisierte Ergebnisse zu erhalten, und
das Verfahren weiter das Zurückgeben (S120) von Ergebnissen umfasst, die basierend auf den zuletzt erhaltenen aktualisierten Ergebnissen erhalten wurden.

9. Das Verfahren nach einem der Ansprüche 1 bis 8, wobei:
die *N* × *M* Speichersysteme (157) digitale Speichersysteme sind;
jede der *N* × *M* Zellen (155) weiter eine arithmetische Einheit (156) umfasst, die mit einem jeweiligen der *N* × *M* Speichersysteme (157) verbunden ist; und
die MAC-Operationen vorzugsweise bit-seriell in P Zyklen, *P* ≥ 2, durchgeführt werden (S84), wobei P einer Bitbreite jeder der *N* Komponenten jedes der bei der Eingabe verwendeten Vektoren entspricht, wodurch Teilproduktwerte nach Abschluss jedes der P Zyklen akkumuliert werden (S86).

10. Ein Computerprogramm für In-Memory-Verarbeitung, wobei das Computerprogrammprodukt ein computerlesbares Speichermedium mit darauf gespeicherten Programmanweisungen umfasst, wobei die Programmanweisungen durch Verarbeitungsmittel einer In-Memory-Verarbeitungs-Hardwarevorrichtung (10) ausführbar sind, um letztere zu veranlassen, die Schritte nach einem der Ansprüche 1 bis 9 auszuführen.

11. Eine In-Memory-Verarbeitungs-Hardwarevorrichtung (10), wobei die Vorrichtung (10) umfasst:
eine Kreuzschienen-Array-Struktur (15) mit *N* Eingangsleitungen (152) und M Ausgangsleitungen (153), die an Kreuzungspunkten miteinander verbunden sind, die *N* × *M* Zellen (155) definieren, wobei *N* ≥ 2 und *M* ≥ 2, wobei die Zellen (155) jeweilige Speichersysteme (157) umfassen, die jeweils zum Speichern von *K* Gewichten eingerichtet sind, *K* ≥ 2, wodurch die Kreuzschienen-Array-Struktur *N* × *M* Speichersysteme (157) umfasst, die dazu eingerichtet sind, *K* Sätze von *N* × *M* Gewichten zu speichern, wobei die *K* Sätze von *N* × *M* Gewichten *K* jeweiligen *N* × *M*-Matrizen entsprechen, wobei jedes der *N* × *M* Gewichte jedes der *K* Sätze einen jeweiligen Matrixkoeffizienten einer jeweiligen der *K* jeweiligen *N* × *M-*Matrizen darstellt, wobei die Kreuzschienen-Array-Struktur dazu konfiguriert ist, Multiplikations-Akkumulations-Operationen, oder MAC-Operationen, auszuführen;
eine mit den *N* × *M* Speichersystemen (157) verbundene Auswahlschaltung (159), die dazu konfiguriert ist, ein Gewicht aus den *K* Gewichten jedes der Speichersysteme auszuwählen und das ausgewählte Gewicht als ein aktives Gewicht festzulegen, um im Betrieb *N* × *M* aktive Gewichte als derzeit aktive Gewichte für die *N* × *M* Zellen (155) freizugeben;
eine Eingabeeinheit (151), die dazu konfiguriert ist, Signale, die einen Vektor aus *N* Komponenten kodieren, an die *N* Eingangsleitungen (152) der Kreuzschienen-Array-Struktur (15) anzulegen, um zu bewirken, dass letztere eine Matrix-Vektor-Multiplikation einer Matrix, die den derzeit aktiven *N* × *M* Gewichten entspricht, und des genannten Vektors durchführt, indem M MAC-Operationen basierend auf dem genannten Vektor und den derzeit aktiven *N* × *M* Gewichten, wie von der Auswahlschaltung (159) freigegeben, im Betrieb durchführt; und
eine Ausleseeinheit (154), die dazu konfiguriert ist, Ausgangssignale auszulesen, die am Ausgang der M Ausgangsleitungen (153) erhalten werden, um M entsprechende Werte eines Ausgangsvektors der genannten Matrix-Vektor-Multiplikation im Betrieb zu erhalten,
wobei vorzugsweise eine Kreuzschienenkonfiguration der Kreuzschienen-Array-Struktur dazu konfiguriert ist zu bewirken, dass die M MAC-Operationen parallel ausgeführt werden, nach dem Anlegen der Signale, die den Vektor mit *N* Komponenten kodieren, an die *N* Eingangsleitungen (152), und wobei die In-Memory-Verarbeitungs-Hardwarevorrichtung (10) vorzugsweise weiter umfasst:
eine Konfigurations- und Steuerlogik (12), die mit jeder der Eingabeeinheit (151) und der Auswahlschaltung (159) verbunden ist;
eine Vor-Daten-Verarbeitungseinheit (13), die mit der Konfigurations- und Steuerlogik (12) verbunden ist; und
eine Nach-Daten-Verarbeitungseinheit (14), die ausgangsseitig mit den Ausgangsleitungen (153) verbunden ist.

12. Die In-Memory-Verarbeitungs-Hardwarevorrichtung (10) nach Anspruch 11, wobei
jedes der *N* × *M* Speichersysteme (157) so ausgestaltet ist, dass seine *K* Gewichte unabhängig programmierbar sind; und
die Vorrichtung (10) weiter eine Programmierschaltung (158) umfasst, die mit dem genannten jedem Speichersystem (157) verbunden ist, wobei die Programmierschaltung (158) dazu konfiguriert ist, die *K* Gewichte der *N* × *M* Speichersysteme zu programmieren.

13. Die In-Memory-Verarbeitungs-Hardwarevorrichtung (10) nach Anspruch 12, wobei die Programmierschaltung (158) weiter dazu konfiguriert ist,
*q* Sätze von *N* × *M* Gewichten, die derzeit nicht als aktive Gewichte festgelegt sind, vorab abzurufen, und
die *N* × *M* Speichersysteme (157) entsprechend zu programmieren, damit letztere die vorab abgerufenen Gewichte anstelle von *q* Sätzen von *N* × *M* Gewichten speichern, wobei 1 ≤ *q* ≤ *K* - 1.

14. Die In-Memory-Verarbeitungs-Hardwarevorrichtung (10) nach einem der Ansprüche 11 bis 13, wobei
jedes der *N* × *M* Speichersysteme (157) *K* Speicherelemente umfasst, die jeweils dazu eingerichtet sind, ein jeweiliges Gewicht der *K* Gewichte zu speichern, und
die Auswahlschaltung (159) *N* × *M* Multiplexer, die jeweils mit jedem der *K* Speicherelemente eines jeweiligen der *N* × *M* Speichersysteme (157) verbunden sind, sowie Auswahlsteuerleitungen umfasst, die mit jedem der Multiplexer verbunden sind, um im Betrieb die Auswahl und Festlegung eines beliebigen der *K* Gewichte jedes der Speichersysteme (157) als aktives Gewicht zu ermöglichen,
und wobei vorzugsweise,
die Auswahlschaltung (159) weiter dazu konfiguriert ist, eine Teilmenge von *n* × *m* Gewichten aus einem der *K* Sätze von *N* × *M* Gewichten auszuwählen, indem sie gleichzeitig das *k*-te Gewicht der *K* Gewichte jedes Speichersystems (157) einer Teilmenge von *n* × *m* Speichersystemen (157) der *N* × *M* Speichersysteme auswählt, wobei 2 ≤ *n* ≤ *N, 2* ≤ *m* ≤ *M* und 1 ≤ *K* ≤ *K.*

15. Die In-Memory-Verarbeitungs-Hardwarevorrichtung (10) nach einem der Ansprüche 11 bis 14, wobei:
die In-Memory-Verarbeitungs-Hardwarevorrichtung (10) weiter eine Sequenzerschaltung und eine Akkumulatorschaltung (154) umfasst;
die Sequenzerschaltung mit der Eingabeeinheit (151) und der Auswahlschaltung (159) verbunden ist, um Operationen der Eingabeeinheit (151) und der Auswahlschaltung (159) zu [koordinieren] orchestrieren, um nacheinander mehrere Zyklen von Matrix-Vektor-Berechnungen basierend auf einem oder mehreren Sätzen von Vektoren durchzuführen, wobei im Betrieb jeder der Zyklen von Matrix-Vektor-Berechnungen einen oder mehrere Zyklen von MAC-Operationen [umfasst] beinhaltet, und ein eigenständiger Satz von *N* × *M* Gewichten aus den *K* Sätzen von *N* × *M* Gewichten ausgewählt und als *N* × *M* aktive Gewichte bei jedem der Zyklen von Matrix-Vektor-Berechnungen festgelegt wird; und
die Akkumulatorschaltung (154) dazu konfiguriert ist, Teilproduktwerte zu akkumulieren, die nach Abschluss jedes MAC-Operationszyklus erhalten werden,
und wobei vorzugsweise
die Akkumulatorschaltung (154) ausgangsseitig von den Ausgangsleitungen (153) angeordnet ist.

16. Die In-Memory-Verarbeitungs-Hardwarevorrichtung (10) nach einem der Ansprüche 11 bis 15, wobei
jedes der *N* × *M* Speichersysteme (157) *K* Speicherelemente umfasst, die jeweils dazu [ausgelegt] eingerichtet sind, ein jeweiliges Gewicht der *K* Gewichte zu speichern,
und wobei vorzugsweise,
jedes der *K* Speicherelemente jedes der *N* × *M* Speichersysteme (157) ein digitales Speicherelement ist, und jede der *N* × *M* Zellen (155) weiter eine arithmetische Einheit (156) umfasst, die über einen jeweiligen Abschnitt der Auswahlschaltung (159) mit jedem der *K* Speicherelemente eines jeweiligen der *N* × *M* Speichersysteme (157) verbunden ist.

17. Die In-Memory-Verarbeitungs-Hardwarevorrichtung (10) nach Anspruch 16, wobei
jedes der *K* Speicherelemente jedes der *N* × *M* Speichersysteme (157) dazu ausgestaltet ist, P-Bit-Gewichte zu speichern;
die Eingabeeinheit (151) dazu konfiguriert ist, die genannten Signale so anzulegen, dass ein Vektor aus *N* Komponenten in *P* Zyklen bit-seriell den Eingangsleitungen (152) zugeführt wird, wobei jede der *N* Komponenten einem P-Bit-Eingangswort entspricht, wobei *P* ≥ 2 ist;
die *N* × *M* Zellen (155) dazu konfiguriert sind, in den P Zyklen MAC-Operationen bit-seriell auszuführen;
die Hardwarevorrichtung (10) weiter eine Akkumulatorschaltung (154) umfasst, die dazu konfiguriert ist, Werte zu akkumulieren, die partiellen, bit-seriellen Produktwerten entsprechen, wie sie in jedem der P-Zyklen erhalten werden; und
die Auswahlschaltung (159) dazu konfiguriert ist, während jedes der P-Zyklen denselben Satz von *N* × *M* Gewichten als aktive Gewichte beizubehalten.

18. Ein Rechensystem (1), umfassend
eine oder mehrere In-Memory-Verarbeitungs-Hardwarevorrichtungen (10), jeweils nach einem der Ansprüche 11 bis 17, wobei das Rechensystem vorzugsweise weiter umfasst:
eine Speichereinheit (2) und eine mit der Speichereinheit verbundene Allzweck-Verarbeitungseinheit (2) zum Lesen von Daten aus der Speichereinheit (2) und zum Schreiben von Daten in diese, wobei
jede der In-Memory-Verarbeitungs-Hardwarevorrichtungen (10) dazu konfiguriert ist, Daten aus der Speichereinheit (2) zu lesen und Daten in diese zu schreiben, und
die Allzweck-Verarbeitungseinheit (2) dazu konfiguriert ist, eine gegebene Rechenaufgabe auf Vektoren und Gewichte für Speichersysteme (157) der einen oder mehreren In-Memory-Verarbeitungs-Hardwarevorrichtungen (10) abzubilden.

## Revendications

1. Procédé de traitement en mémoire, le procédé comprenant :
la fourniture(S10) d'une structure de réseau à barres croisées (15) comprenant *N* lignes d'entrée (152) et M lignes de sortie (153), qui sont interconnectées au niveau de points de croisement définissant *N* × *M* cellules (155), où *N* ≥ 2 et *M* ≥ 2, les cellules (155) comprenant des systèmes de mémoire respectifs (157), chacun étant conçu pour stocker *K* poids, *K* ≥ 2, moyennant quoi la structure de réseau à barres croisées (15) comprend *N* × *M* systèmes de mémoire stockant *K* ensembles de *N* × *M* poids correspondant à *K* matrices *N* × *M* respectives, dans laquelle chacun des *N* × *M* poids de chacun des *K* ensembles représente un coefficient matriciel respectif d'une matrice respective parmi les *K* matrices *N* × *M* respectives ;
l'activation (S70) de *N* × *M* poids en tant que poids actuellement actifs pour les *N* × *M* cellules (155) en sélectionnant, pour chacun des systèmes de mémoire (157), un poids parmi ses *K* poids et en établissant le poids sélectionné comme poids actif ;
l'application (S82) de signaux codant un vecteur de *N* composantes aux *N* lignes d'entrée (152) de la structure de réseau à barres croisées (15) afin d'amener cette dernière à effectuer (S84) une multiplication matrice-vecteur d'une matrice correspondant aux *N* × *M* poids actuellement actifs et dudit vecteur en effectuant M opérations de multiplication-accumulation, ou opérations MAC, sur la base dudit vecteur et des *N* × *M* poids actuellement actifs, les *M* opérations MAC impliquant *N* × *M* multiplications et *N* × *M* additions ; et
la lecture (S86, S90) de signaux de sortie obtenus en sortie des *M* lignes de sortie (153) afin d'obtenir *M* valeurs correspondantes d'un vecteur de sortie de ladite multiplication matrice-vecteur.

2. Procédé selon la revendication **1**, dans lequel une configuration à barres croisées de la structure de réseau à barres croisées entraîne, lors de l'application (S82) des signaux codant le vecteur de *N* composantes aux *N* lignes d'entrée (152), l'exécution en parallèle des *M* opérations MAC.

3. Procédé selon la revendication **1** ou **2,** dans lequel
le procédé comprend en outre, pendant l'exécution d'opérations MAC selon *N* × *M* poids actuellement rendus actifs, le préchargement (S115) de *q* ensembles de *N* × *M* poids devant être utilisés ensuite et le stockage des poids préchargés dans les *N* × *M* systèmes de mémoire (157), à la place de *q* ensembles de *N* × *M* poids qui étaient précédemment actifs, où 1 ≤ *q* ≤ *K* - 1.

4. Procédé selon la revendication **1, 2** ou **3,** dans lequel
les *N* × *M* poids actifs sont activés (S70) en sélectionnant concomitamment le *k*-ième poids parmi les *K* poids de chaque système de mémoire (157) d'au moins un sous-ensemble des *N* × *M* systèmes de mémoire (157) et en établissant chaque poids ainsi sélectionné comme poids actuellement actif, où 1 *≤ k ≤ K.*

5. Procédé selon l'une quelconque des revendications **1** à **4,** dans lequel
le procédé comprend l'exécution (S58 - S110) de plusieurs cycles de calcul matrice-vecteur, chacun des cycles comprenant :
l'activation (S70) d'un nouvel ensemble de *N* × *M* poids actifs pour les *N × M* cellules (155) en sélectionnant, pour chacun des systèmes de mémoire (157), un poids parmi ses *K* poids et en établissant le poids sélectionné comme poids actif ;
l'application (S82) de signaux codant un vecteur de *N* composantes aux *N* lignes d'entrée (152) de la structure de réseau à barres croisées (15) afin d'amener cette dernière à effectuer (S84) des opérations MAC, sur la base du vecteur et du nouvel ensemble de *N* × *M* poids actifs ; et
la lecture (S86, S90) de signaux de sortie obtenus en sortie des *M* lignes de sortie (153) afin d'obtenir des valeurs correspondantes, et,
de préférence, le procédé comprend en outre, au niveau d'une unité de traitement externe,
le mappage (S30) d'un problème donné sur un nombre donné de sous-vecteurs et *K* ensembles de poids *N × M,* avant la programmation (S55) des *N × M* systèmes de mémoire (157) conformément aux *K* ensembles de *N × M* poids et le codage des sous-vecteurs en signaux d'entrée, en vue d'appliquer (S82) ces signaux d'entrée aux *N* lignes d'entrée (152) pour effectuer lesdits plusieurs cycles de calcul matrice-vecteur.

6. Procédé selon la revendication **5,** dans lequel
chacun des cycles comprend en outre l'accumulation (S90) de résultats de produits partiels correspondant aux signaux de sortie lus, moyennant quoi des accumulations sont effectuées successivement, et,
de préférence, le procédé comprend en outre, à l'issue (S110 : Oui) desdits plusieurs cycles de calcul matrice-vecteur, le renvoi (S120) des résultats obtenus sur la base des accumulations successives vers une unité de mémoire externe (2).

7. Procédé selon la revendication **6,** dans lequel
le procédé comprend en outre, avant l'achèvement de *K* cycles parmi lesdits plusieurs cycles de calcul matrice-vecteur :
le préchargement (S115) de *q* ensembles de poids *N* × *M* et le stockage de ces derniers dans les systèmes (157) de mémoire *N* × *M,* à la place de *q* ensembles de poids *N* × M précédemment rendus actifs, où 1 ≤ *q* ≤ *K -* 1.

8. Procédé selon la revendication **7,** dans lequel
le procédé comprend l'exécution (S50 - S110) de *K* × *T* cycles de calcul matrice-vecteur, où *T* correspond à un nombre de vecteurs d'entrée, dans lequel chacun des vecteurs d'entrée est décomposé en *K* sous-vecteurs de *N* composantes et est associé à *K* matrices de blocs respectives, ces dernières correspondant à *K* ensembles de poids *N* × *M*, moyennant quoi les *K* × *T* cycles de calcul matrice-vecteur sont exécutés par :
le chargement (S55) de *K* ensembles de poids *N* × *M* correspondant auxdites *K* matrices de blocs respectives et la programmation en conséquence des systèmes de mémoire (157) afin qu'ils stockent les *K* ensembles de poids *N* × *M*; et
pour chaque sous-vecteur (S60) parmi les *K* sous-vecteurs de chacun des *T* vecteurs d'entrée,
l'activation (S70) de *N* × *M* poids actifs correspondant à l'une des *K* matrices de blocs respectives associées en tant que poids actuellement actifs ;
l'application (S82) de signaux codant un vecteur correspondant à chacun desdits sous-vecteurs aux *N* lignes d'entrée (152) afin d'amener la structure de réseau à barres croisées (15) à effectuer (S84) des opérations MAC sur la base de chacun desdits sous-vecteurs et des poids actuellement actifs, et
la lecture de signaux de sortie obtenus en sortie des *M* lignes de sortie (153) afin d'obtenir des valeurs partielles correspondantes,
et dans lequel, de préférence,
la lecture desdits signaux de sortie comprend l'accumulation (S90) des valeurs partielles obtenues pour chacun desdits sous-vecteurs avec des valeurs partielles précédemment obtenues pour un sous-vecteur précédent, le cas échéant, afin d'obtenir des résultats mis à jour, et
le procédé comprend en outre le renvoi (S120) de résultats obtenus sur la base des résultats mis à jour obtenus en dernier.

9. Procédé selon l'une quelconque des revendications **1** à **8,** dans lequel :
les *N* × *M* systèmes de mémoire (157) sont des systèmes de mémoire numériques ;
chacune des *N* × *M* cellules (155) comprend en outre une unité arithmétique (156) connectée à un système respectif parmi les *N* × *M* systèmes de mémoire (157) ; et
les opérations MAC sont de préférence effectuées (S84) en série de bits en *P* cycles, *P* ≥ 2, où *P* correspond à une largeur en bits de chacune des *N* composantes de chacun des vecteurs utilisés en entrée, moyennant quoi les valeurs de produits partiels sont accumulées (S86) à l'issue de chacun des *P* cycles.

10. Produit-programme d'ordinateur destiné au traitement en mémoire, le produit-programme d'ordinateur comprenant un support de stockage lisible par ordinateur comportant des instructions de programme qui y sont incorporées, lesdites instructions de programme étant exécutables par des moyens de traitement d'un dispositif matériel de traitement en mémoire (10) afin d'amener ce dernier à exécuter les étapes de l'une quelconque des revendications **1** à **9.**

11. Dispositif matériel de traitement en mémoire (10), dans lequel le dispositif (10) comprend :
une structure (15) de réseau à barres croisées comprenant *N* lignes d'entrée (152) et *M* lignes de sortie (153), qui sont interconnectées au niveau de points de croisement définissant *N* × *M* cellules (155), où *N ≥* 2 et *M* ≥ 2, les cellules (155) comprenant des systèmes de mémoire respectifs (157), chacun étant conçu pour stocker *K* poids, *K ≥* 2, moyennant quoi la structure de réseau à barres croisées comprend *N* × *M* systèmes de mémoire (157) adaptés à stocker *K* ensembles de *N* × *M* poids, dans lequel les *K* ensembles de *N* × *M* poids correspondent à *K* matrices *N × M* respectives, et dans lequel chacun des *N* × *M* poids de chacun des *K* ensembles représente un coefficient matriciel respectif d'une matrice respective parmi les *K* matrices *N* × *M* respectives, la structure de réseau à barres croisées étant configurée pour effectuer des opérations de multiplication-accumulation, ou opérations MAC ;
un circuit de sélection (159) connecté aux *N* × *M* systèmes de mémoire (157), le circuit de sélection (159) étant configuré pour sélectionner un poids parmi les *K* poids de chacun des systèmes de mémoire et pour établir le poids sélectionné comme poids actif, de manière à rendre actifs *N* × *M* poids en tant que poids actuellement actifs pour les *N × M* cellules (155), en fonctionnement ;
une unité d'entrée (151) configurée pour appliquer des signaux codant un vecteur de *N* composantes aux *N* lignes d'entrée (152) de la structure de réseau à barres croisées (15) afin d'amener cette dernière à effectuer une multiplication matrice-vecteur d'une matrice correspondant aux *N* × *M* poids actuellement actifs et audit vecteur, en effectuant *M* opérations MAC basées sur ledit vecteur et les *N* × *M* poids actuellement actifs, tels qu'activés par le circuit de sélection (159), en fonctionnement ; et
une unité de lecture (154) configurée pour lire les signaux de sortie obtenus en sortie des *M* lignes de sortie (153) afin d'obtenir *M* valeurs correspondantes d'un vecteur de sortie de ladite multiplication matrice-vecteur, en fonctionnement,
dans lequel, de préférence, une configuration à barres croisées de la structure de réseau à barres croisées est configurée pour faire en sorte que les *M* opérations MAC soient effectuées en parallèle, lors de l'application des signaux codant le vecteur de *N* composantes aux *N* lignes d'entrée (152),
et dans lequel, de préférence, le dispositif matériel de traitement en mémoire (10) comprend en outre :
une logique de configuration et de commande (12) connectée à la fois à l'unité d'entrée (151) et au circuit de sélection (159) ;
une unité de prétraitement de données (13) connectée à la logique de configuration et de commande (12) ; et
une unité de post-traitement de données (14) connectée en sortie des lignes de sortie (153).

12. Dispositif matériel de traitement en mémoire (10) selon la revendication **11,** dans lequel
chacun des *N* × *M* systèmes de mémoire (157) est conçu de telle sorte que ses *K* poids soient programmables indépendamment ; et
le dispositif (10) comprend en outre un circuit de programmation (158) connecté à chacun desdits systèmes de mémoire (157), le circuit de programmation (158) étant configuré pour programmer les *K* poids des *N × M* systèmes de mémoire.

13. Dispositif matériel de traitement en mémoire (10) selon la revendication **12,** dans lequel le circuit de programmation (158) est en outre configuré pour
précharger *q* ensembles de poids N × *M* qui ne sont pas actuellement établis comme poids actifs, et
programmer en conséquence les *N* × *M* systèmes de mémoire (157), afin que ces derniers stockent les poids préchargés à la place de *q* ensembles de *N* × *M* poids, où 1 *≤ q ≤ K* - 1.

14. Dispositif matériel de traitement en mémoire (10) selon l'une quelconque des revendications **11** à **13,** dans lequel
chacun des *N* × *M* systèmes de mémoire (157) comprend *K* éléments de mémoire, chacun étant adapté pour stocker un poids respectif parmi les *K* poids, et
le circuit de sélection (159) comprend *N* × *M* multiplexeurs, chacun étant connecté à chacun des *K* éléments de mémoire d'un système de mémoire respectif parmi les *N* × *M* systèmes de mémoire (157), ainsi que des lignes de commande de sélection, qui sont connectées à chacun des multiplexeurs, de manière à permettre de sélectionner l'un quelconque des *K* poids de chacun des systèmes de mémoire (157) et de l'établir comme poids actif, en fonctionnement,
et dans lequel, de préférence,
le circuit de sélection (159) est en outre configuré pour sélectionner un sous-ensemble de *n* × *m* poids parmi l'un des *K* ensembles de *N × M* poids, en sélectionnant concomitamment le k-ième poids parmi les *K* poids de chaque système de mémoire (157) d'un sous-ensemble de *n* × m systèmes de mémoire (157) parmi les *N* × *M* systèmes de mémoire, où 2 ≤ *n* ≤ *N,* 2 *≤ m ≤ M* et 1 *≤ k ≤ K.*

15. Dispositif matériel de traitement en mémoire (10) selon l'une quelconque des revendications **11** à **14,** dans lequel :
le dispositif matériel de traitement en mémoire (10) comprend en outre un circuit séquenceur et un circuit accumulateur (154) ;
le circuit séquenceur est connecté à l'unité d'entrée (151) et au circuit de sélection (159) afin d'orchestrer les opérations de l'unité d'entrée (151) et du circuit de sélection (159), de manière à effectuer successivement plusieurs cycles de calculs matrice-vecteur basés sur un ou plusieurs ensembles de vecteurs, dans lequel, en fonctionnement, chacun des cycles de calculs matrice-vecteur implique un ou plusieurs cycles d'opérations MAC, et un ensemble distinct de *N* × *M* poids est sélectionné parmi les *K* ensembles de *N* × *M* poids et établi comme *N* × *M* poids actifs à chacun des cycles de calculs matrice-vecteur ; et
le circuit accumulateur (154) est configuré pour accumuler des valeurs de produits partiels obtenues à l'issue de chaque cycle d'opérations MAC,
et dans lequel, de préférence,
le circuit accumulateur (154) est disposé en sortie des lignes de sortie (153).

16. Dispositif matériel de traitement en mémoire (10) selon l'une quelconque des revendications **11** à **15,** dans lequel
chacun des *N* × *M* systèmes de mémoire (157) comprend *K* éléments de mémoire, chacun étant adapté pour stocker un poids respectif parmi les *K* poids, et dans lequel, de préférence,
chacun des *K* éléments de mémoire de chacun des *N* × *M* systèmes de mémoire (157) est un élément de mémoire numérique, et
chacune des *N* × *M* cellules (155) comprend en outre une unité arithmétique (156), qui est connectée à chacun des *K* éléments de mémoire d'un système de mémoire respectif parmi les *N* × *M* systèmes de mémoire (157) via une partie respective du circuit de sélection (159).

17. Dispositif matériel de traitement en mémoire (10) selon la revendication **16,** dans lequel
chacun des *K* éléments de mémoire de chacun des *N* × *M* systèmes de mémoire (157) est conçu pour stocker des poids de P bits ;
l'unité d'entrée (151) est configurée pour appliquer lesdits signaux de manière à fournir, en série de bits, un vecteur de *N* composantes aux lignes d'entrée (152) en *P* cycles, chacune des *N* composantes correspondant à un mot d'entrée de P bits, où *P* ≥ 2 ;
les *N* × *M* cellules (155) sont configurées pour effectuer des opérations MAC en série de bits au cours des *P* cycles ;
le dispositif matériel (10) comprend en outre un circuit accumulateur (154), qui est configuré pour accumuler des valeurs correspondant à des valeurs de produit partiel en série de bits, telles qu'obtenues à chacun des *P* cycles ; et
le circuit de sélection (159) est configuré pour maintenir un même ensemble de *N* × *M* poids en tant que poids actifs au cours de chacun des *P* cycles.

18. Système de calcul (1) comprenant
un ou plusieurs dispositifs matériels de traitement en mémoire (10), chacun selon l'une quelconque des revendications **11** à **17,** dans lequel, de préférence, le système de calcul comprend en outre :
une unité de mémoire (2) et une unité de traitement à usage général (2) connectée à l'unité de mémoire pour lire des données depuis l'unité de mémoire (2) et y écrire des données, dans lequel
chacun des dispositifs matériels de traitement en mémoire (10) est configuré pour lire des données depuis l'unité de mémoire (2) et y écrire des données, et
l'unité de traitement à usage général (2) est configurée pour faire correspondre une tâche de calcul donnée à des vecteurs et des poids destinés aux systèmes de mémoire (157) du ou des dispositifs matériels de traitement en mémoire (10).
